(19) Europäisches Patentamt
European Patent Office
Office européen des brevets

(11) EP 3 778 715 B1

(12) EUROPEAN PATENT SPECIFICATION

(45) Date of publication and mention of the grant of the patent:
**25.05.2022 Bulletin 2022/21**

(21) Application number: **19778312.9**

(22) Date of filing: **22.03.2019**

(51) International Patent Classification (IPC):
***C04B 35/622*** *(2006.01)* ***C08G 79/00*** *(2006.01)*
***D01F 6/76*** *(2006.01)* ***C04B 35/626*** *(2006.01)*
***C04B 35/632*** *(2006.01)* ***D01F 9/10*** *(2006.01)*
***H01G 4/12*** *(2006.01)* ***H01G 4/30*** *(2006.01)*

(52) Cooperative Patent Classification (CPC):
**C04B 35/6325; C01G 23/00; C01G 23/04; C01G 25/00; C01G 25/02; C04B 35/62231; C04B 35/62236; C04B 35/6225; C04B 35/62254; C04B 35/62259; C04B 35/6263; C04B 35/6264; C08G 79/00; D01F 6/76; D01F 9/10;** (Cont.)

(86) International application number:
**PCT/JP2019/012228**

(87) International publication number:
**WO 2019/188835 (03.10.2019 Gazette 2019/40)**

(54) **POLYMETALLOXANE, COMPOSITION, CURED FILM, MEMBER, ELECTRONIC COMPONENT, FIBER, BINDER FOR CERAMIC MOLDING, CURED FILM PRODUCTION METHOD, AND FIBER PRODUCTION METHOD**

POLYMETALLOXAN, ZUSAMMENSETZUNG, GEHÄRTETER FILM, ELEMENT, ELEKTRONISCHES BAUTEIL, FASER, BINDEMITTEL FÜR KERAMISCHES FORMTEIL, VERFAHREN ZUR HERSTELLUNG EINES GEHÄRTETEN FILMS UND VERFAHREN ZUR HERSTELLUNG VON FASERN

POLYMÉTALLOXANE, COMPOSITION, FILM DURCI, ÉLÉMENT, COMPOSANT ÉLECTRONIQUE, FIBRE, LIANT POUR MOULAGE CÉRAMIQUE, PROCÉDÉ DE PRODUCTION DE FILM DURCI ET PROCÉDÉ DE PRODUCTION DE FIBRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2018 JP 2018064028**
**29.03.2018 JP 2018064029**

(43) Date of publication of application:
**17.02.2021 Bulletin 2021/07**

(73) Proprietor: **Toray Industries, Inc.**
**Tokyo, 103-8666 (JP)**

(72) Inventors:
- **NARUTO, Masayuki**
  **Otsu-shi, Shiga 520-8558 (JP)**
- **SUWA, Mitsuhito**
  **Otsu-shi, Shiga 520-8558 (JP)**
- **KAMOGAWA, Masao**
  **Otsu-shi, Shiga 520-8558 (JP)**

(74) Representative: **Hoefer & Partner Patentanwälte mbB**
**Pilgersheimer Straße 20**
**81543 München (DE)**

(56) References cited:
**WO-A1-2005/113142 WO-A1-2009/051023**
**WO-A1-2010/050581 WO-A1-2017/090512**
**WO-A1-2017/090512 WO-A2-2015/156703**
**JP-A- S5 898 428 JP-A- 2009 013 398**
**JP-A- 2015 003 896 US-A1- 2016 299 451**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **ABE Y ET AL: "Preparation of polymetalloxanes as a precursor for oxide ceramics", JOURNAL OF NON-CRYSTALLINE SOLIDS, NORTH-HOLLAND PHYSICS PUBLISHING. AMSTERDAM, NL, vol. 121, no. 1-3, 1 May 1990 (1990-05-01) , pages 21-25, XP024059078, ISSN: 0022-3093, DOI: 10.1016/0022-3093(90)90097-6 [retrieved on 1990-05-01]**

(52) Cooperative Patent Classification (CPC): (Cont.)
**H01G 4/12; H01G 4/30;** C04B 2235/3217; C04B 2235/3232; C04B 2235/3244; C04B 2235/3418; C04B 2235/5264; C04B 2235/72; D01D 5/003; D01D 5/04; D01D 5/06; H01G 4/1209

**Description**

Technical Field

The present invention relates to polymetalloxane, compositions, cured films, members, electronic components, fibers, binders for ceramic molding, cured film production methods, and fiber production methods.

Background Art

A film made of a metal oxide has properties such as high heat resistance and high refractive index and is expected to show properties useful for various applications. There has been known, as a method of forming such a film, a method of forming a film made of titanium oxide or zirconium oxide by a vapor phase method such as chemical vapor deposition (CVD). However, because of the low film forming rate, it is difficult for the vapor phase method such as CVD to achieve a film thickness that can be industrially used.

On the other hand, there has been proposed a method comprising applying a solution of polymetalloxane having a metal-oxygen-metal atom binding in its backbone and curing it to obtain a high refractive index thin film. Such a polymetalloxane can be obtained by hydrolysis of a metal alkoxide followed by polycondensation of the hydrolysate. However, in general, when a metal alkoxide is hydrolyzed, the hydrolysate aggregates and becomes insoluble in a solvent. For this reason, a polymetalloxane that stably exists in a uniform state in a solution and can form a homogeneously cured film is demanded.

In the past literatures, there has been reported technology in which deposition or gelation due to aggregation of a hydrolysate is prevented by carefully carrying out the hydrolysis under special conditions (see, for example, Patent Literatures 1 and 2). Furthermore, polymetalloxane has been reported, which stably and homogeneously exists in solutions, due to a specific substituent introduced in side chains in the polymer (see, for example, Patent Literature 3).

Citation List

Patent Literature

Patent Literature 1: JP 1-129032 A
Patent Literature 2: JP 2015-3896 A
Patent Literature 3: WO2017/090512

ABE Y ET AL: "Preparation of polymetalloxanes as a precursor for oxide ceramics",JOURNAL OF NON-CRYSTALLINE SOLIDS, NORTH-HOLLAND PHYSICS PUBLISHING. AMSTERDAM, NL, vol. 121, no. 1-3, 1 May 1990 (1990-05-01), pages 21-25, discloses polyzirconoxane and polytitanoxane compounds that are used to spin ceramic fibers.

JPS5898428A discloses polyaluminoxane and polytitanoxane compounds that are used to spin ceramic fibers.

WO2017/090512A1 discloses polymetalloxane compounds that are used to make an electronic component that contain a cured film, which contains the polymetalloxane.

Summary of Invention

Technical Problem

However, the method described in Patent Literature 1, as a method of hydrolyzing a metal alkoxide in a solvent, will result in precipitation due to aggregation of hydrolysates when water is added at a temperature of lower than 70°C or in an increased amount. In addition, because of low rate of the hydrolysis, numerous alkoxy groups will remain in the resulting polytitanoxane and the alkoxy group will be hydrolyzed by water in the air during formation of a coating film to be eliminated. Thus, the polytitanoxane described above will produce cracks, failing to form a homogeneous film.

The method described in Patent Literature 2 will also result in precipitation due to aggregation of hydrolysates when increased amount of water is added. Therefore, a high molecular weight polymetalloxane cannot be obtained, leading to crack generation during formation of a coating film, thus failing to form a homogeneous cured film.

The method described in Patent Literature 3 employs a specific group such as trialkylsiloxy group as a side group to provide polymetalloxane that can exist stably and uniformly in a solvent. Such a polymetalloxane can be obtained, for example, by using as a raw material a compound obtained by reacting trialkylsilanol and a metal alkoxide. However, trialkylsilanol is expensive, which makes the stable industrial supply of polymetalloxane very costly.

In light of the above problems, an object of the present invention is to provide a high-molecular-weight polymetalloxane that can homogeneously and stably exist in solvents, and can be stably industrially supplied.

Solution to Problem

In order to solve the above-described problems and achieve the object, the polymetalloxane of the present invention comprises a constituent unit represented by the following general formula (1):

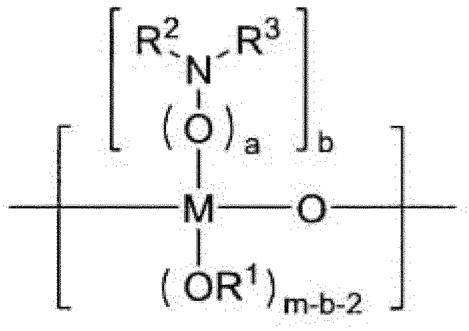

...(1)

wherein,

$R^1$ is a hydrogen atom or an alkyl group having 1 to 10 carbon atoms;
$R^2$ and $R^3$ are each independently a hydrogen atom, an alkyl group having 1 to 12 carbon atoms, an alicyclic alkyl group having 5 to 12 carbon atoms, an aromatic group having 6 to 30 carbon atoms, or an acyl group having 1 to 12 carbon atoms;
$R^2$ and $R^3$ are optionally linked together via a carbon-carbon saturated or a carbon-carbon unsaturated bond to form a ring structure;
a is an integer of 0 or 1;
M represents a metal atom selected from the group consisting of Al, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, Tl, and Bi;
m is an integer indicating the valence of the metal atom M; and
b is an integer of 1 to (m-2).

The polymetalloxane of the present invention is characterized in that, in the above-described invention, the constituent unit represented by the general formula (1) is a constituent unit represented by the following general formula (2):

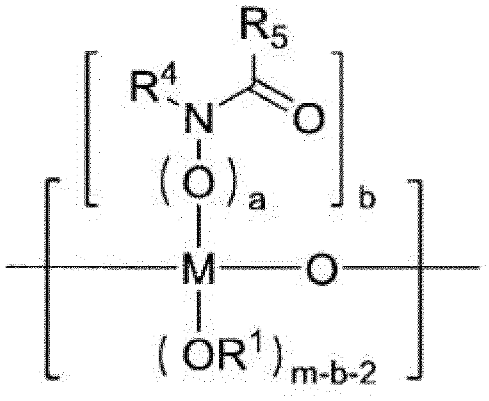

...(2)

wherein,

$R^4$ is a hydrogen atom, an alkyl group having 1 to 12 carbon atoms, an alicyclic alkyl group having 5 to 12 carbon atoms, an aromatic group having 6 to 30 carbon atoms, or an acyl group having 1 to 12 carbon atoms;
$R^5$ is, independently from $R^4$, a hydrogen atom, an alkyl group having 1 to 12 carbon atoms, an alicyclic alkyl group having 5 to 12 carbon atoms, or an aromatic group having 6 to 30 carbon atoms; and

$R^4$ and $R^5$ are optionally linked together via a carbon-carbon saturated or a carbon-carbon unsaturated bond to form a ring structure.

The polymetalloxane of the present invention is characterized in that, in the above-described invention, the constituent unit represented by the general formula (1) is a constituent unit represented by the following general formula (3):

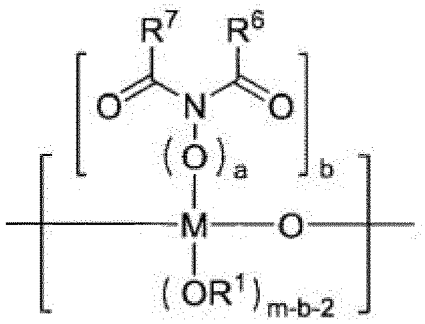

···(3)

wherein,

$R^6$ and $R^7$ are each independently a hydrogen atom, an alkyl group having 1 to 12 carbon atoms, an alicyclic alkyl group having 5 to 12 carbon atoms, or an aromatic group having 6 to 30 carbon atoms; and
$R^6$ and $R^7$ are optionally linked together via a carbon-carbon saturated or a carbon-carbon unsaturated bond to form a ring structure.

The polymetalloxane of the present invention is characterized in that, in the above-described invention, the integer a is 1.
The polymetalloxane of the present invention is characterized in that, in the above-described invention, wherein the metal atom M comprises at least one metal atom selected from the group consisting of Al, Ti, Zr, and Sn.
The composition of the present invention is characterized by comprising polymetalloxane according to any one of the above-described inventions.
The composition of the present invention is characterized by, in the above-described invention, further comprising a metal element-containing compound.
The cured film of the present invention is characterized by comprising the polymetalloxane according to any one of the preceding aspects.
The cured film of the present invention is characterized by comprising the composition according to any one of the above-described inventions.
The method of producing a cured film of the present invention is characterized by, comprising the step of heating the polymetalloxane or the composition according to any one of the above-described inventions.
The member of the present invention is characterized by comprising the cured film according to any one of the above-described inventions.
The electronic component of the present invention is characterized by comprising the member according to the above-described invention.
The fiber of the present invention is characterized by comprising the polymetalloxane according to any one of the above-described inventions.
The fiber of the present invention is characterized by comprising the composition according to any one of the above-described inventions.
The method of producing a fiber of the present invention is characterized by comprising the step of spinning the polymetalloxane or the composition according to any one of the above-described invention into a fiber.
The method of producing a fiber according to the present invention is characterized by, in the above-described invention, comprising the step of firing the fiber obtained by the spinning step.
The binder for ceramic molding of the present invention is characterized by comprising the polymetalloxane according to any one of the above-described inventions.

Advantageous Effects of Invention

According to the present invention, polymetalloxane that can homogeneously and stably exist in solvents, and

can be stably industrially supplied can be provided. The polymetalloxane according to the present invention has an effect that a cured film having high refractive index can be provided.

Description of Embodiments

Embodiments for carrying out the present invention will be described in detail below. However, the present invention is not limited to the following embodiments and can be performed with various modification based on the purpose or application.

(Polymetalloxane)

In one embodiment of the present invention, the polymetalloxane has a constituent unit represented by the general formula (1).

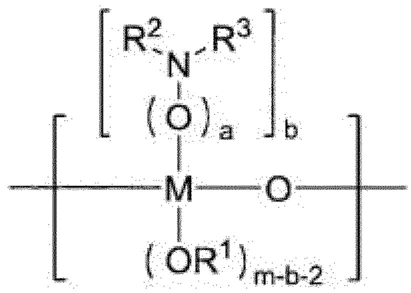

···(1)

In the general formula (1), $R^1$ is a hydrogen atom, or an alkyl group having 1 to 10 carbon atoms. $R^2$ and $R^3$ are each independently a hydrogen atom, an alkyl group having 1 to 12 carbon atoms, an alicyclic alkyl group having 5 to 12 carbon atoms, an aromatic group having 6 to 30 carbon atoms, or an acyl group having 1 to 12 carbon atoms. $R^2$ and $R^3$ are optionally linked together via a carbon-carbon saturated or a carbon-carbon unsaturated bond to form a ring structure. a is an integer of 0 or 1. M represents a metal atom selected from the group consisting of Al, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, Tl, and Bi. m is an integer indicating the valence of the metal atom M. b is an integer of 1 to (m-2).

Examples of the alkyl group having 1 to 12 carbon atoms include a methyl group, an ethyl group, a propyl group, an isopropyl group, a butyl group, an isobutyl group, a s-butyl group, a t-butyl group, a pentyl group, a hexyl group, a heptyl group, an octyl group, a 2-ethylhexyl group, a nonyl group, a decyl group, a undecyl group, and a dodecyl group.

Examples of the alicyclic alkyl group having 5 to 12 carbon atoms include a cyclopentyl group, a cyclohexyl group, a cycloheptyl group, a cyclooctyl group, a cyclononyl group, a cyclodecyl group.

Examples of the aromatic group having 6 to 30 carbon atoms include a phenyl group, a phenoxy group, a benzyl group, a phenylethyl group, a naphthyl group.

Examples of the acyl group having 1 to 12 carbon atoms include a formyl group, an acetyl group, a trifluoroacetyl group, a phenylacetyl group, a propionyl group, and a benzoyl group.

Examples of the ring structure formed by $R^2$ and $R^3$ linking together via a carbon-carbon saturated bond or a carbon-carbon unsaturated bond include a pyrrolidine structure, a piperidine structure, a lactam structure, a succinimide structure, a phthalimide structure, and a maleimide structure.

The polymetalloxane having the constituent unit represented by the general formula (1) has an $R^2R^3N(O)_a$ group, leading to significant improvement in compatibility with other components. Therefore, the polymetalloxane stably exists in solvents. The polymetalloxane having the constituent unit represented by the general formula (1) has the $R^2R^3N(O)_a$ group, thus enabling release of condensation stress of the polymetalloxane by heating in the step of forming the cured film mentioned later. Therefore, use of the polymetalloxane enables formation of a homogeneous cured film which hardly generates cracking.

Specific examples of the $R^2R^3N(O)_a$ group include a dimethylamino group, a diethylamino group, a dipropylamino group, a diisopropylamino group, a dibutylamino group, a diisobutylamino group, a di-s-butylamino group, a di-t-butylamino group, a dicyclohexylamino group, a diphenylamino group, a methylphenylamino group, an ethylphenylamino group, a propylphenylamino group, a dinaphthylamino group, a methylnaphthylamino group, an ethylnaphthylamino group, a propylnaphthylamino group, a pyrrolidyl group, a piperidyl group, and a 2,2,6,6-tetramethylpiperidyl group.

Specific examples of the $R^2R^3N(O)_a$ group also include a diethylaminooxy group, a dibenzylaminooxy group, a 2-azaadamantanyloxy group; a formamide group, a formanilide group, an acetamide group, an acetanilide group, a

trifluoroacetamide group, a 2,2,2,2-trifluoroacetanilide group, a benzamide group, a benzanilide group, a pyrrolidone group, a piperidone group; an N-acetoamidyloxy group, an N-octaneamidyloxy group, an N-benzamidyloxy group, an N-benzoyl-N-phenylaminooxy group, an N-naphthalene-1-carboxyamidyloxy group, an N-salicylamidyloxy group, and an alfa-(p-butoxyphenyl)-N-acetoamidyloxy group.

Specific examples of the $R^2R^3N(O)_a$ group also include a succinimidyl group, a 2-ethyl-2-methylsuccinimidyl group, a 1,2-cyclohexanedicarboxyimidyl group, a cis-4-cyclohexene-1,2-dicarboxyimidyl group, a 1,8-naphthalimidyl group, a phthalimidyl group, a 4-aminophthalimidyl group, a 4-bromophthalimidyl group, a 4-nitrophthalimidyl group, a 3,4,5,6-tetrachlorophthalimidyl group, a 1,2,3,4-cyclobutanetetracarboxylic dimidyl group, a 1,4,5,8-naphthalenetetracarboxylic dimidyl group, a pyromellitic dimidyl group, a 3,3-tetramethyleneglutarimidyl group, a glutarimidyl group, a maleimidyl group, a 3,3-dimethylglutarimidyl group, a 3-ethyl-3-methylglutarimidyl group, and a bistrifluoroacetoamidyl group.

Specific examples of the $R^2R^3N(O)_a$ group further include an N-succinimidyloxy group, an N-phthalimidyloxy group, an N-(4-nitrophthalimidyl)oxy group, an N-(5-norbornene-2,3-dicarboxyimidyl)oxy group, an N-oxysulfosuccinimide sodium group, an N-(N'-hydroxypyromellitimidyl)oxy group, an N-(1,8-naphthalimidyl)oxy group, and an N-(N'-hydroxy-1,2,3,4-cyclobutanetetracarboxylic dimidyl)oxy group.

In a preferred embodiment of the present invention, the constituent unit in polymetalloxane, represented by the general formula (1), is a constituent unit represented by the following general formula (2).

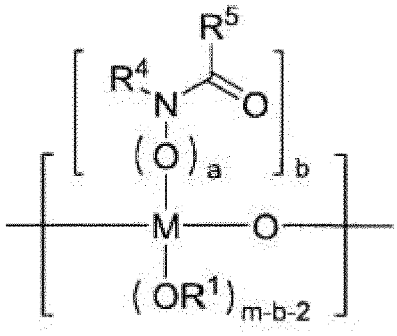

···(2)

In the general formula (2), $R^4$ is a hydrogen atom, an alkyl group having 1 to 12 carbon atoms, an alicyclic alkyl group having 5 to 12 carbon atoms, an aromatic group having 6 to 30 carbon atoms, or an acyl group having 1 to 12 carbon atoms. $R^5$ is, independently from $R^4$, a hydrogen atom, an alkyl group having 1 to 12 carbon atoms, an alicyclic alkyl group having 5 to 12 carbon atoms, or an aromatic group having 6 to 30 carbon atoms. $R^4$ and $R^5$ are optionally linked together via a carbon-carbon saturated or a carbon-carbon unsaturated bond to form a ring structure.

Polymetalloxane having a constituent unit represented by the general formula (2) has carbonyl groups, which stabilizes hydroxy groups in polymetalloxane. This allows for further improvement of the compatibility with solvents and stability of polymetalloxane.

In a further preferred embodiment of the present invention, the constituent unit in polymetalloxane, represented by the general formula (1), is a constituent unit represented by the following general formula (3).

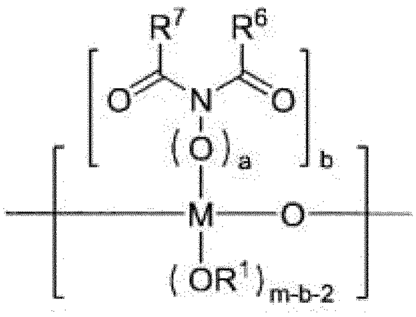

···(3)

In the general formula (3), $R^6$ and $R^7$ are each independently a hydrogen atom, an alkyl group having 1 to 12 carbon atoms, an alicyclic alkyl group having 5 to 12 carbon atoms, or an aromatic group having 6 to 30 carbon atoms. $R^6$ and $R^7$ are optionally linked together via a carbon-carbon saturated or a carbon-carbon unsaturated bond to form a ring structure.

Polymetalloxane having a constituent unit represented by the general formula (3) has more carbonyl groups

than polymetalloxane having a constituent unit represented by the general formula (2), which further stabilizes hydroxy groups in polymetalloxane. This allows for further improvement of the compatibility with solvents and stability of polymetalloxane.

From the viewpoint of the stability during hydrolysis and polycondensation in production of polymetalloxane, $R^6$ and $R^7$ are preferably linked together via a carbon-carbon saturated or a carbon-carbon unsaturated bond to form a ring structure.

Preferably, the integer a in the general formula (1) is 1 from the viewpoint of the solubility of polymetalloxane to solvents. Thus, preferred examples of the $R^2R^3N(O)_a$ group include an N-succinimidyloxy group, an N-phthalimidyloxy group, an N-(4-nitrophthalimidyl)oxy group, an N-(5-norbornene-2,3-dicarboxyimidyl)oxy group, an N-oxysulfosuccinimide sodium group, an N-(N'-hydroxypyromellitic imidyl)oxy group, an N-(1,8-naphthalimidyl)oxy group, and an N-(N'-hydroxy-1,2,3,4-cyclobutanetetracarboxylic dimidyl)oxy group.

In the general formula (1), when represented by the ratio of the number of moles of nitrogen atoms (N) to the number of moles of metal atoms (M) (the number of moles of nitrogen atoms (N) / the number of moles of metal atoms (M)) in the polymetalloxane, the content of the $R^2R^3N(O)_a$ group is preferably 1 mol% or more and 250 mol% or less, more preferably 10 mol% or more and 200 mol% or less. By setting the content of the $R^2R^3N(O)_a$ group in the above range, the compatibility of the polymetalloxane with other components is further improved. Therefore, the polymetalloxane still further stably exists in solvents.

The content of a $R^2R^3N(O)_a$ group in polymetalloxane can be determined by the following method. In this method, polymetalloxane is first loaded into an NMR tube and subjected to a nuclear magnetic resonance (NMR) analysis for a metal atom M using an NMR apparatus. This can determine the molar concentration of the metal atom M. For example, when the metal atom M is a titanium atom (Ti), $^{49}$Ti-NMR analysis is performed to determine the molar concentration of the titanium atom. $^{15}$N-NMR analysis is then performed, and the peak corresponding to $N(O)_aM$ is used to determine the molar concentration of the nitrogen atom of $R^2R^3N(O)_a$ group. The obtained molar concentration of the nitrogen atom can be divided by the molar concentration of the metal atom M to determine the content of the $R^2R^3N(O)_a$ group in polymetalloxane.

In one embodiment of the present invention, when the polymetalloxane has a constituent unit represented by the general formula (1), it is possible to form a cured film mainly composed of a resin containing metal atoms having high electron density in the main chain. Therefore, the density of metal atoms in the cured film can be increased, thus making it possible to easily achieve a high refractive index of the cured film. In one embodiment of the present invention, when the polymetalloxane has a constituent unit represented by the general formula (1), a dielectric having no free electrons is obtained, thus making it possible to achieve high heat resistance.

In the general formula (1), the metal atom M preferably includes at least one metal atom selected from the group consisting of Al, Ti, Zr, and Sn. Use of these metal atoms allows the polymetalloxane to have a high refractive index. More preferably, the metal atom M is Ti or Zr. In the general formula (1), the integer m is preferably 3 or more and 5 or less.

The lower limit of the weight average molecular weight of the polymetalloxane is preferably 500 or more, more preferably 1,000 or more, and still more preferably 10,000 or more. The upper limit of the weight average molecular weight is preferably 3,000,000 or less, more preferably 1,500,000 or less, and still more preferably 1,000,000 or less. When the weight average molecular weight is in the above range, the coating properties of the polymetalloxane are good. When the weight average molecular weight is the lower limit or more, the physical properties of the cured film mentioned later are improved, thus obtaining a cured film particularly excellent in crack resistance.

The weight average molecular weight in the present invention means a value in terms of polystyrene measured by gel permeation chromatography (GPC). The weight average molecular weight of polymetalloxane can be determined by the following method. In this method, polymetalloxane is first dissolved in an eluent solvent such that the concentration became 0.2% by weight to prepare a sample solution. Subsequently, the sample solution is poured into a column packed with a porous gel and an eluent. The column eluate is detected by a differential refractive index detector and the elution time is analyzed to determine the weight average molecular weight of the polymetalloxane. The eluent to be selected is one that can dissolve polymetalloxane to a concentration of 0.2% by weight. Particularly when polymetalloxane is dissolved in a solution of 0.02 mol/$dm^3$ lithium chloride and N-methyl-2-pyrrolidone, this solution is used as the eluent.

(Method for Producing Polymetalloxane)

A method of producing polymetalloxane in one embodiment of the present invention will be described below. The present invention may employ any method to produce polymetalloxane comprising a constituent unit represented by the general formula (1). Preferably, the production method comprises hydrolyzing a metal alkoxide represented by the following general formula (4) and partially condensing and polymerizing it to produce polymetalloxane. Here, the partial condensation means not to condense all the M-OH of the hydrolysate, but to leave a part of M-OH in the resultant polymetalloxane. Under the general condensation conditions as mentioned later, generally, M-OH partially remains. The

amount of remaining M-OH is not particularly limited.

$$\left(R^8\right)_n M \left(OR^9\right)_{m-n} \quad \cdots (4)$$

In the general formula (4), $R^8$ represents an $R^2R^3N(O)_a$ group. $R^9$ is an alkyl group having 1 to 10 carbon atoms. When a plurality of $R^8$ and $R^9$ exist, they may be the same or different. M represents a metal atom selected from the group consisting of Al, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, Tl, and Bi. m is an integer indicating the valence of the metal atom M. n is an integer of 1 to (m-1).

In general, since an alkoxy group has high hydrolyzability, addition of water to a metal alkoxide results in production of a metal hydroxide in which all the alkoxy groups in the molecule are hydrolyzed. This metal hydroxide aggregates in a solvent and become insoluble in the solvent, which results in its precipitation.

On the other hand, as for a metal alkoxide represented by the general formula (4), the hydrolyzability of the $R^2R^3N(O)_a$ group is relatively lower than alkoxy group. Thus, addition of water to the metal alkoxide can result in selective hydrolysis of the alkoxy group. The obtained hydrolysate is stabilized due to steric hindrance of the $R^2R^3N(O)_a$ group and intramolecular hydrogen bonds and thus will not aggregate in solvents. This gives a uniform solution of the hydrolysate. Therefore, it is possible to increase the degree of hydrolysis of metal alkoxide as compared with conventional technology. Therefore, it is possible to obtain a high molecular weight polymetalloxane, particularly a polymetalloxane having a weight average molecular weight exceeding 10,000, by hydrolyzing and polycondensing a metal alkoxide represented by the general formula (4).

In the present invention, a metal alkoxide having $R^8$ is not particularly limited to those represented by the general formula (4). For example, when the metal atom M is Ti, metal alkoxides having one $R^8$ include trimethoxy(N-succinimidyloxy) titanium, triethoxy(N-succinimidyloxy) titanium, tripropoxy(N-succinimidyloxy) titanium, triisopropoxy(N-succinimidyloxy) titanium, tributoxy(N-succinimidyloxy) titanium, triisobutoxy(N-succinimidyloxy) titanium, tri-s-butoxy(N-succinimidyloxy) titanium, tri-t-butoxy(N-succinimidyloxy) titanium, tricyclohexoxy(N-succinimidyloxy) titanium, and triphenoxy(N-succinimidyloxy) titanium.

Metal alkoxides having one $R^8$ may also be those in which the N-succinimidyloxy group in in the alkoxide is substituted by an N-phthalimidyloxy group, such as triisopropoxy(N-phthalimidyloxy) titanium and tributoxy(N-phthalimidyloxy) titanium.

Metal alkoxides having one $R^8$ may also be those in which the N-succinimidyloxy group in the alkoxide is substituted by an N-(4-nitrophthalimidyl)oxy group, including triisopropoxy(N-(4-nitrophthalidyl)oxy) titanium, and tributoxy(N-(4-nitrophthalimidyl)oxy) titanium.

Metal alkoxides having one $R^8$ may also be those in which the N-succinimidyloxy group in the alkoxide is substituted by an N-(5-norbornene-2,3-dicarboxyimidyl)oxy group, such as triisopropoxy(N-(5-norbornene-2,3-dicarboxyimidyl)oxy) titanium, and tributoxy(N-(5-norbornene-2,3-dicarboxyimidyl)oxy) titanium.

Metal alkoxides having one $R^8$ may also be those in which the N-succinimidyloxy group in the alkoxide is substituted by an N-(1,8-naphthalimidyl)oxy group, such as triisopropoxy(N-(1,8-naphthalimidyl)oxy)titanium, and tributoxy(N-(1,8-naphthalimidyl)oxy)titanium.

Examples of metal alkoxides having two $R^8$ include dimethoxybis(N-succinimidyloxy)titanium, diethoxybis(N-succinimidyloxy)titanium, dipropoxybis(N-succinimidyloxy)titanium, diisopropoxybis(N-succinimidyloxy)titanium, dibutoxybis(N-succinimidyloxy)titanium, diisobutoxybis(N-succinimidyloxy)titanium, di-s-butoxybis(N-succinimidyloxy)titanium, di-t-butoxybis(N-succinimidyloxy)titanium, dicyclohexoxybis(N-succinimidyloxy)titanium, and diphenoxybis(N-succinimidyloxy)titanium.

Metal alkoxides having two $R^8$ may also be those in which the N-succinimidyloxy group in in the above-described group is substituted by an N-phthalimidyloxy group, such as diisopropoxybis(N-phthalimidyloxy)titanium, and dibutoxybis(N-phthalimidyloxy)titanium.

Metal alkoxides having two $R^8$ may also be those in which the N-succinimidyloxy group in the above-described group is substituted by an N-(4-nitrophthalimidyl)oxy group, such as diisopropoxybis(N-(4-nitrophthalimidyl)oxy)titanium, and dibutoxybis(N-(4-nitrophthalimidyl)oxy)titanium.

Metal alkoxides having two $R^8$ may also be those in which the N-succinimidyloxy group in the above described group is substituted by an N-(5-norbornene-2,3-dicarboxyimidyl)oxy group, such as diisopropoxybis(N-(5-norbornene-2,3-dicarboxyimidyl)oxy)titanium, and dibutoxybis(N-(5-norbornene-2,3-dicarboxyimidyl)oxy)titanium.

Metal alkoxides having two $R^8$ may also be those in which the N-succinimidyloxy group in in the above-described group is substituted by an N-(1,8-naphthalimidyl)oxy group, such as diisopropoxybis(N-(1,8-naphthalimidyl)oxy)titanium, and dibutoxybis(N-(1,8-naphthalimidyl)oxy)titanium.

On the other hand, in the case where the metal atom M is Zr, metal alkoxides having $R^8$ may be those in which titanium in the above-described alkoxide is substituted by zirconium, such as tri-n-propoxy(N-succinimidyloxy)zirconium,

tri-n-propoxy(N-phthalimidyloxy)zirconium, tri-n-propoxy(N-(4-nitrophthalimidyl)oxy)zirconium, tri-n-propoxy(N-(5-norbornene-2,3-dicarboxyimidyl)oxy)zirconium, tri-n-propoxy(N-(1,8-naphthalimidyl)oxy)zirconium, di-n-propoxybis(N-succinimidyloxy)zirconium, di-n-propoxybis(N-phthalimidyloxy)zirconium, di-n-propoxybis(N-(4-nitrophthalimidyl)oxy)zirconium, di-n-propoxybis(N-(5-norbornene-2,3-dicarboxyimidyl)oxy)zirconium, and di-n-propoxybis(N-(1,8-naphthalimidyl)oxy)zirconium.

In the case where the metal atom M is Al, examples of metal alkoxides having $R^8$ include dimethoxy(N-succinimidyloxy)aluminum, diethoxy(N-succinimidyloxy)aluminum, dipropoxy(N-succinimidyloxy)aluminum, diisopropoxy(N-succinimidyloxy)aluminum, dibutoxy(N-succinimidyloxy)aluminum, diisobutoxy(N-succinimidyloxy)aluminum, di-s-butoxy(N-succinimidyloxy)aluminum, di-t-butoxy(N-succinimidyloxy)aluminum, dicyclohexoxy(N-succinimidyloxy)aluminum, and diphenoxy(N-succinimidyloxy)aluminum.

Metal alkoxides having $R^8$ may also be those in which the N-succinimidyloxy group in the alkoxide is substituted by an N-phthalimidyloxy group, such as di-s-butoxy(N-phthalimidyloxy)aluminum.

Metal alkoxides having $R^8$ may also be those in which the N-succinimidyloxy group in the alkoxide is substituted by an N-(4-nitrophthalimidyl)oxy group, such as di-s-butoxy(N-(4-nitrophthalimidyl)oxy)aluminum.

Metal alkoxides having $R^8$ may also be those in which the N-succinimidyloxy group in the alkoxide is substituted by an N-(5-norbornene-2,3-dicarboxyimidyl)oxy group, such as di-s-butoxy(N-(5-norbornene-2,3-dicarboxyimidyl)oxy)aluminum.

Metal alkoxides having $R^8$ may also be those in which the N-succinimidyloxy group in the alkoxide is substituted by an N-(1,8-naphthalimidyl)oxy group, such as di-s-butoxy(N-(1,8-naphthalimidyl)oxy)aluminum.

A general method can be used for hydrolysis, partial condensation, and polymerization of the metal alkoxide. For example, the reaction conditions for the hydrolysis are preferably such that water is added to the metal alkoxide over 1 to 180 minutes in a solvent, and then the mixture is allowed to react at room temperature to 110°C for 1 to 180 minutes. By performing hydrolysis under such reaction conditions, rapid hydrolysis reaction can be prevented. The temperature in the hydrolysis reaction is preferably 30 to 150°C. During hydrolysis of the metal alkoxide, a catalyst may be added, as needed.

As the reaction conditions for partial condensation and polymerization of the metal alkoxide, a metal hydroxide is obtained by a hydrolysis reaction of the metal alkoxide, and then the reaction solution is directly heated at 50°C to 180°C for 1 to 100 hours. To increase the degree of polymerization of the polymetalloxane, reheating of or addition of a catalyst to the reaction solution may be performed. After the hydrolysis reaction of the metal alkoxide, an appropriate amount of the thus produced alcohol or the like may be, as necessary, evaporated and removed by at least one of heat and reduced pressure, and then an arbitrary solvent may be added.

Non-limiting examples of the solvent that can be preferably used include amide solvents, ester solvents, alcohol solvents, ether solvents, ketone solvents, and dimethyl sulfoxide.

Specific examples of the amide solvents include N,N-dimethyl formamide, N,N-dimethylacetamide, N,N-dimethylisobutyramide, N-methyl-2- pyrrolidone, 1,3-dimethyl -2-imidazolidinone, and N,N-dimethylpropyleneurea.

Specific examples of the ester solvents include γ-butyrolactone, δ-valerolactone, propylene carbonate, ethyl acetate, n-propyl acetate, isopropyl acetate, n-butyl acetate, isobutyl acetate, propyleneglycol monomethylether acetate, 3-methoxy-1-butyl acetate, 3-methyl-3-methoxy-1-butyl acetate, ethyl accetoacetate, and cyclohexanol acetate.

Specific examples of the alcohol solvent include methanol, ethanol, n-propanol, isopropanol, n-butanol, isobutanol, t-butanol, 3-hydroxy-3-methyl-2-butanone, 5-hydroxy-2-pentanone, 4-hydroxy-4-methyl-2-pentanone(diacetone alcohol), ethyl lactate, butyl lactate, propylene glycol monomethyl ether, propylene glycol monoethyl ether, propylene glycol mono-n-propyl ether, propylene glycol mono-n-butyl ether, propylene glycol mono-t-butyl ether, diethylene glycol monomethyl ether, diethylene glycol monoethyl ether, dipropylene glycol monomethyl ether, 3-methoxy-1-butanol, 3-methyl-3-methoxy-1-butanol, ethylene glycol, and propylene glycol.

Specific examples of the ether solvents include diethyl ether, diisopropyl ether, di-n-butyl ether, diphenyl ether, diethylene glycol ethyl methyl ether, diethylene glycol dimethyl ether, 1,2-dimethoxyethane, 1,2-diethoxyethane, and dipropylene glycol dimethyl ether.

Specific examples of the ketone solvent include methyl isobutyl ketone, diisopropyl ketone, diisobutyl ketone, acetylacetone, cyclopentanone, cyclohexanone, cycloheptanone, and dicyclohexyl ketone.

More preferred solvents are aprotic polar solvents. Use of an aprotic polar solvent allows for obtaining polymetalloxane that is stable in solvents and has higher molecular weight. Particularly preferred aprotic polar solvents include N,N-dimethyl formamide, N,N-dimethylacetamide, N,N-dimethyl isobutyramide, N-methyl-2- pyrrolidone, 1,3-dimethyl -2-imidazolidinone, N,N-dimethyl propyleneurea, γ-butyrolactone, δ-valerolactone, propylene carbonate, and dimethyl sulfoxide.

By adjusting the amount of water added in the hydrolysis reaction of the metal alkoxide, it is possible to adjust the degree of hydrolysis of the metal alkoxide. The amount of water added is preferably 0.1 to 2 moles based on 1 mole of the alkoxy group.

There is no particular limitation on the catalyst to be added as necessary, for example, during the hydrolysis

reaction of the metal alkoxide, and an acidic catalyst or a basic catalyst is preferably used. Specific examples of the acidic catalyst include hydrochloric acid, nitric acid, sulfuric acid, hydrofluoric acid, phosphoric acid, acetic acid, difluoroacetic acid, formic acid, a polyvalent carboxylic acid or an anhydride thereof, and an ion exchange resin. Specific example of the base catalyst includes diethylamine, dipropylamine, dibutylamine, dipentylamine, dihexylamine, diheptylamine, dioctylamine, triethylamine, tripropylamine, tributylamine, triisobutylamine, tripentylamine, trihexylamine, triheptylamine, trioctylamine, diethanolamine, triethanolamine, dicyclohexylamine, dicyclohexylmethylamine, 2,2,6,6-tetramethylpiperidine, sodium hydroxide, potassium hydroxide, alkoxy silane having an amino group, and an ion exchange resin.

More preferred catalyst is a basic catalyst. By using a basic catalyst, a particularly high molecular weight polymetalloxane can be obtained. Among the base catalysts, diethylamine, dipropylamine, dibutylamine, dipentylamine, dihexylamine, diheptylamine, dioctylamine, triethylamine, tripropylamine, tributylamine, triisobutylamine, tripentylamine, trihexylamine, triheptylamine, trioctylamine, diethanolamine, triethanolamine, dicyclohexylamine, dicyclohexylmethylamine, and 2,2,6,6-tetramethylpiperidine are particularly preferred.

From the viewpoint of the storage stability of the composition, it is preferable that the above-mentioned catalyst is not contained in the polymetalloxane solution after hydrolysis, partial condensation, and polymerization, and the catalyst can be optionally removed. There is no particular limitation on the method of removing the catalyst, and at least one of washing with water and a treatment with an ion exchange resin is preferred from the viewpoint of easy operation and removability. Washing with water is a method of removing the catalyst, in which a polymetalloxane solution is diluted with an appropriate hydrophobic solvent and washed several times with water, and then the obtained organic layer is concentrated with an evaporator or the like. The treatment with an ion exchange resin is a method of removing the catalyst in which a polymetalloxane solution is brought into contact with an appropriate ion exchange resin.

(Composition of Polymetalloxane)

In one embodiment of the present invention, polymetalloxane can be mixed with a solvent and other necessary components to obtain a composition. Thus, in one embodiment of the present invention, the composition contains at least the above-mentioned polymetalloxane.

In the present invention, the polymetalloxane, when prepared into a composition, is preferably diluted with a solvent to adjust the solid content concentration. The solvent is not particularly limited and is preferably the same solvent as that used in the synthesis of the polymetalloxane. The concentration of the solid content in the solution containing the polymetalloxane is preferably set at 0.1 to 50% by weight. When the solid content concentration is within the range, the thicknesses of the polymetalloxane coating film can be better controlled.

During the adjustment of the solid content concentration in the polymetalloxane solution, other components may be added to the solution. Examples of the other components include metal element-containing compounds, surfactants, and silane coupling agents. Thus, in one embodiment of the present invention, the composition preferably further contains other components such as metal element-containing compounds, in addition to the polymetalloxane as described above.

The metal element-containing compound is preferably used for improving the chemical resistance of the cured film. The metal element-containing compound allows polymetalloxanes to together form a crosslinked structure. Thus, a denser cured film of the polymetalloxane and the composition can be obtained. The metal element-containing compound may remain in the cured film.

Preferred examples of the metal element-containing compound include organometallic complexes. Specific examples of the organometallic complexes include mono-s-butoxy aluminum diisopropylate, aluminum-s-butyrate, ethyl acetoacetate aluminum diisopropylate, aluminum bis(ethylacetate), alkylacetoaluminum diisopropylate, aluminum monoacetylacetonate bis(ethylacetoacetate), aluminum bis(acetylacetonate), aluminum tris(acetylacetate), zirconium bis(acetylacetate), zirconium bis(ethylacetoacetate), titanium bis(acetylacetate), titanium bis(ethylacetoacetate), tetra-n-butoxy titanium, a condensate (oligomer) of tetra-n-butoxy titanium, and a condensate (oligomer) of tetraisopropoxy titanium.

The total content of the metal element-containing compound in the composition is preferably 0.1 parts by weight or more and 50 parts by weight or less, and more preferably 1 part by weight or more and 20 parts by weight or less, based on 100 parts by weight of the polymetalloxane.

The surfactant is preferably used in order to improve the thicknesses uniformity when the polymetalloxane or the composition thereof is applied. The surfactant may remain in the cured film.

There is no particular limitation on the type of the surfactant. Examples of the surfactant that can be used include fluorine-based surfactants such as "MEGAFAC (registered trademark)" F142D, MEGAFAC F172, MEGAFAC F173, MEGAFAC F183, MEGAFAC F445, MEGAFAC F470, MEGAFAC F475, and MEGAFAC F477 (all of which are manufactured by Dainippon Ink and Chemicals, Inc.) and NBX-15, FTX-218, and DFX-18 (manufactured by Neos Corporation); silicone-based surfactants such as BYK-333, BYK-301, BYK-331, BYK-345, and BYK-307 (manufactured by

BYK-Chemie Japan); polyalkylene oxide-based surfactants; and poly(meth)acrylate-based surfactants. Two or more types of these surfactants may be used.

The content of the surfactant in the composition is preferably 0.001 parts by weight or more and 10 parts by weight or less, and more preferably 0.01 parts by weight or more and 1 part by weight or less, based on 100 parts by weight of the polymetalloxane.

The silane coupling agent is preferably used for improving the adhesion to the substrate. There is no particular limitation on the type of the silane coupling agent. Examples of the silane coupling agent include vinyldimethoxysilane, vinyldiethoxysilane, 2-(3,4-epoxycyclohexyl)ethyldimethoxysilane, 3-glycidoxypropyldimethoxysilane, 3-methacryloxypropylmethyldimethoxysilane, 3-methacryloxypropyldimethoxysilane, 3-acryloxypropyldimethoxy silane, 3-aminopropyldimethoxysilane, 3-aminopropyldiethoxysilane, 3-diethoxysilyl-N-(1,3-dimethyl -butylidene)propylamine, 3-mercaptopropylmethyldimethoxysilane, 3-mercaptopropyldimethoxysilane, 3-isocyanatepropyldiethoxysilane, diphenyldimethoxysilane, dimethylsilanol, and diphenylsilanediol.

The content of the silane coupling agent in the composition is preferably 0.1 parts by weight or more and 50 parts by weight or less, and more preferably 1 part by weight or more and 20 parts by weight or less, based on 100 parts by weight of the polymetalloxane.

(Cured Film and Production Method thereof)

In one embodiment of the present invention, the cured film contains the polymetalloxane described above or the composition of the polymetalloxane described above. In one embodiment of the present invention, the method of producing the cured film can comprises applying the polymetalloxane or the composition containing the same as described above onto a substrate, and heating it to provide a cured film. Thus, the method of producing the cured film comprises at least the step of heating the polymetalloxane or the composition thereof as described above. The thus obtained cured film is mainly composed of a resin having a metal atom having a high electron density in the main chain, so that the density of metal atoms in the cured film can be increased, thus easily obtaining a high refractive index. Since the cured film becomes a dielectric containing no free electrons, high heat resistance can be obtained.

Examples of the substrate on which the polymetalloxane or the composition thereof is applied include, but are not limited to, a silicon wafer, a sapphire wafer, glass, or an optical film. Examples of the glass include alkali glass, alkali-free glass, thermally tempered glass, or chemically tempered glass. Examples of the optical film include a film made of an acrylic resin, a polyester resin, a polycarbonate, a polyarylate, a polyether sulfone, a polypropylene, a polyethylene, a polyimide, or a cycloolefin polymer.

In a specific embodiment of the present invention, the method of producing the cured film comprises the step of applying the polymetalloxane or the composition thereof as described above onto a substrate, and the heating step as described above. In the application step, known methods can be used as the method of applying the polymetalloxane or the composition thereof as described above onto a substrate. Examples of the apparatus used for coating include full-surface coating apparatuses such as spin coating, dip coating, curtain flow coating, spray coating, or slit coating, or printing apparatus such as screen printing, roll coating, micro gravure coating or ink jet.

After applying the polymetalloxane or the composition thereof onto a substrate, heating (pre-baking) may be, if necessary, performed in the application step using a heating device such as a hot plate or an oven. Pre-baking is preferably performed at a temperature in a range of 50°C to 150°C for 30 seconds to 30 minutes to make the coating film on the substrate into a pre-bake film. By performing pre-baking, the thickness uniformity of the coating film can be improved. The thicknesses of the coating film after pre-baking is preferably 0.1 μm or more and 15 μm or less.

The application step performed as described above is followed by a heating step of heating the polymetalloxane or the composition thereof on the substrate to obtain a cured film. In the heating step, the coating film or the prebake film obtained in the application step is heated (cured) at a temperature in a range of 150°C to 450°C for 30 seconds to 2 hours using a heating device such as a hot plate or an oven. This can provide a cured film containing the polymetalloxane or the composition thereof. The thickness of the cured film is preferably 0.1 μm or more and 15 μm or less.

The thus obtained cured film preferably has a refractive index of 1.58 or more and 2.20 or less at a wavelength of 550 nm, and more preferably 1.65 or more and 2.10 or less.

The refractive index of the cured film can be measured by the following method. For example, in the method of measuring the refractive index, change in the polarization state of reflected light from the cured film and the substrate is measured using a spectroscopic ellipsometer to obtain a phase difference from the incident light and a spectrum of the amplitude reflectance. By fitting the dielectric function of the calculation model such that it approaches the obtained spectrum, a refractive index spectrum is obtained. By reading the refractive index value at a wavelength of 550 nm from the obtained refractive index spectrum, the refractive index of the cured film can be obtained.

(Use of Cured Film)

In one embodiment of the present invention, the cured film, which is excellent in refractive index and insulating properties, is suitably used as a member of electronic components, such as solid-state image sensors and displays. A member refers to a part constituting an electronic component. Thus, in one embodiment of the present invention, the member comprises a cured film containing the polymetalloxane or the composition thereof as described above. In one embodiment of the present invention, the electronic component comprises such a cured film. Members of a solid-state image sensor include, for example, a condensing lens, an optical waveguide connecting a condensing lens and a photosensor, and an antireflection coating. Members of a display include, for example, an index-matching material, a flattening material, and an insulation protection material.

(Use of Fiber)

In one embodiment of the present invention, a solution of the polymetalloxane or the composition thereof can be spun into a fiber. Thus, in one embodiment of the present invention, the fiber contains the polymetalloxane described above or the composition of the polymetalloxane described above. The thus obtained fiber can be fired to obtain a metal oxide fiber.

A fiber made of a metal oxide has properties such as high heat resistance, high strength, and surface activity, and is expected to have properties useful for various applications. In general, such a fiber (metal oxide fiber) is produced by a melt spinning method. This method is as described below. For example, in this method, a metal oxide material and a low-melting compound such as silica are first mixed. Next, the mixture is fused in a high-temperature furnace and removed as a fused product stream. This thin stream is exposed to spraying of a high-pressure air or application of a centrifugal force to be rapidly cooled, giving a metal oxide fiber. However, since higher concentration of a metal oxide material will lead to higher fusion temperature, it is difficult for the melt spinning method to provide a metal oxide fiber containing a high concentration of a metal oxide (hereinafter also abbreviated as high-concentration metal oxide fiber).

A general method of obtaining a high-concentration metal oxide fiber is known, comprising preparing a fibrous precursor using a spinning solution containing a metal oxide material and a thickener and heat-spinning it. However, such a method produces holes and cracks when the thickener is lost due to firing during the firing process, leading to a problem of poor strength of the obtained metal oxide fiber.

The polymetalloxane and the composition thereof according to embodiments of the present invention can be handled in a solution state and thus be spun without the need for such melting step that is performed in the melt spinning method as described above. Furthermore, the polymetalloxane and the composition thereof do not need a thickener for spinning and thus can provide a dense metal oxide fiber. Thus, a metal oxide fiber showing properties such as high heat resistance, high strength, and surface activity can be readily obtained.

(Method of Producing Fiber)

In one embodiment of the present invention, the method of producing a fiber comprises at least a spinning step of spinning the polymetalloxane or the composition thereof as described above into a fiber. In the spinning step, known methods can be used as the method of spinning a solution of the polymetalloxane or the composition thereof. Examples of the spinning method include dry spinning, wet spinning, dry-wet spinning, and electro-spinning methods. Hereinafter, the term "the polymetalloxane or the composition thereof" is optionally abbreviated as "composition or the like."

The dry spinning method is a method comprising charging the composition or the like, extruding it via a porous die to an atmosphere by applying a load, and evaporating the organic solvent to obtain a thread-like product. In this method, the composition or the like may be heated after charging, thereby decreasing the viscosity during extrusion. The composition or the like may be extruded to a heated atmosphere, thereby controlling the evaporation rate of the organic solvent. After the composition or the like is extruded, the thread-like product may be stretched by rolling rollers or a high-speed airflow.

The wet spinning method is a method comprising extruding the composition or the like via a porous die to a coagulation bath by applying a load, and removing the organic solvent to obtain a thread-like product. Preferably, the coagulation bath to be used is water or a polar solvent. The dry-wet spinning method is a method comprising extruding the composition or the like to an atmosphere, then immersing it in a coagulation bath, and removing the organic solvent to obtain a thread-like product.

The electro-spinning method is a method comprising applying high voltage to a nozzle filled with the composition or the like to make the droplet at the tip of the nozzle having increased electric charge, and allowing the droplets to repel each other and spread, thereby stretching the solution flow and achieving spinning. This method allows for obtaining a thread-like product having a small diameter. Thus, the electro-spinning method allows for obtaining a thread-like product having a small diameter from dozens of nanometers to few micrometers.

Among them, a dry spinning or electro-spinning method may be particularly preferably used as the spinning method in the spinning step in the present invention.

In the spinning step in the present invention, the fiber obtained by spinning may be, if necessary, treated with drying, water vapor, hot water, or a combination thereof before being fired.

The fiber obtained by spinning in the above-mentioned spinning step can be fired to advance the crosslinking reaction and remove organic components such as an organic group, resulting in a metal oxide fiber having excellent strength. Thus, in one embodiment of the present invention, where a metal compound fiber is produced, the method of producing a fiber comprises the above-mentioned spinning step and a firing step of firing a fiber obtained in the above-mentioned spinning step. There is no particular limitation on the firing temperature in the firing step, which is preferably 200°C or higher and 2000°C or lower, more preferably 400°C or higher and 1500°C or lower. There is no particular limitation on the firing method. Examples of the firing method include firing methods in an air atmosphere, in inert atmospheres such as nitrogen and argon, and in a vacuum.

The firing step in the present invention may also comprise further firing the obtained metal oxide fiber in a reducing atmosphere such as hydrogen. Alternatively, in the firing step, the fiber obtained by spinning or the metal oxide fiber may be fired with being exposed to a tension.

Such a method can provide a continuous, dense metal oxide fiber having an average fiber diameter of 0.01 μm or more and 1,000 μm or less. The average fiber diameter of the metal oxide fiber is preferably 0.01 μm or more and 1,000 μm or less, more preferably 0.10 μm or more and 200 μm or less. When the average fiber diameter is within the range described above, the metal oxide fiber can be obtained as a homogeneous fiber without crack.

The average fiber diameter of the obtained metal oxide fiber can be determined according to the following method. For example, an adhesive tape is applied onto a pasteboard, and a single fiber to be measured for its fiber diameter is put horizontally on the adhesive tape, which is then used as a single fiber test piece. The single fiber test piece is observed from the top surface with an electron microscope, and the width of the image is considered as the fiber diameter. The fiber diameter is the average of three measurements along the longitudinal direction. This operation was performed on 20 randomly selected single fibers and the resulting fiber diameters were averaged to obtain the average fiber diameter.

Fibers such as metal oxide fibers obtained by spinning a solution of the polymetalloxane or the composition thereof according to one embodiment of the present invention into a fiber and firing the fiber can be used as composite materials such as photocatalysts, heat insulating materials, heat dissipating materials, and fiber reinforced plastics (FRP). For example, the fiber can be used as a photocatalyst in water- and air-purification filters and the like. The fiber can be used as a heat insulating material or a heat dissipating material in electric furnaces, nuclear fuel rod sheaths, aircraft engine turbines, heat exchangers, and the like.

(Use as Binder for Ceramic Molded Product)

In a preferred embodiment of the present invention, the polymetalloxane is suitably used as a binder for ceramic molded products. Thus, in one embodiment of the present invention, the binder for ceramic molded products contains the above-mentioned polymetalloxane. The binder for ceramic molded products is a binder for making a ceramic material powder containing metal oxide particles and sintering agents pasty and moldable. Ceramics produced using as a binder the polymetalloxane in the binder for ceramic molded products according to one embodiment of the present invention can be used as electronic members. More specifically, the polymetalloxane in the binder for ceramic molded products can be used as an inorganic binder for producing green sheets. Green sheets produced by such a method can be suitably used for producing electronic members such as multilayer capacitors and ceramic substrates.

In general, green sheets are obtained by molding a pasty composition comprising a ceramic material powder, a binder, and a solvent into a paper- or platelike shape, and drying it. The green sheets are then processed and sintered to produce many types of electronic members.

However, there has been a problem, when the binder used in production of a green sheet is an organic polymer, of deterioration of electrical characteristics of electronic members due to the remaining ash after sintering. Furthermore, there has been a problem of larger volume shrinkage rate of green sheets due to decomposition of organic components during sintering, which causes cracks and warps in the green sheets.

On the other hand, the polymetalloxane according to embodiments of the present invention is an inorganic polymer having a metal atom-oxygen atom-metal atom bonding in its backbone. Thus, when the polymetalloxane is used as a binder, ashes remaining after sintering can be greatly reduced. In addition, the polymetalloxane becomes a metal oxide after being sintered, thus allowing for prevention of volume shrinkage of green sheets.

## Examples

The present invention will be described more specifically with reference to Examples, but the present invention

is not limited to these Examples and the like.

In Synthesis Examples and Examples, analyses by Fourier transform infrared spectroscopy (hereinafter abbreviated to FT-IR) were performed by the following method. First, a tableted potassium bromide was measured using a Fourier transform infrared spectrometer (FT720, manufactured by Shimadzu Corporation) and was used as a baseline. Next, a sample solution was vacuum-dried, and about 0.5 wt% of the solid residue was mixed with a potassium bromide powder and tableted to prepare a sample. An absorbance of the polymetalloxane was calculated from the difference between the absorbance of the measurement sample and the absorbance of the baseline, and an absorption peak was read.

(Synthesis Example 1)

A method of synthesizing a titanium compound (T-1) of Synthesis Example 1 will be described. In a method of synthesizing a titanium compound (T-1), 28.4 g (0.1 mol) of tetraisopropoxy titanium was added to a 500-mL three-necked flask, and the three-necked flask was immersed in an oil bath at 40°C with stirring for 30 minutes. Then, 11.5 g (0.1 mol) of N-hydroxysuccinimide was dissolved in 50 g of N-methyl-2- pyrrolidone (hereinafter, abbreviated as NMP). The solution was added to the three-necked flask over 1 hour using a dropping funnel. After the addition, the mixture was stirred for additional 1 hour. Then, isopropyl alcohol, a by-product, was removed by evaporation under reduced pressure to obtain 82.1 g of a titanium compound solution of Synthesis Example 1, i.e., a solution of a titanium compound (T-1) in NMP

The titanium compound solution was analyzed by FT-IR, showing an absorption peak of Ti-O-N (1107 $cm^{-1}$) and an absorption peak of C=O in imide (1712 $cm^{-1}$). From this, the obtained titanium compound (T-1) was estimated as triisopropoxy(N-succinimidyloxy)titanium.

(Synthesis Example 2)

A method of synthesizing a titanium compound (T-2) of Synthesis Example 2 will be described. The method of synthesizing a titanium compound (T-2) was performed in the same manner as in Synthesis Example 1, except that 11.5 g (0.1 mol) of N-hydroxysuccinimide in Synthesis Example 1 was changed to 17.9 g (0.1 mol) of N-hydroxy-5-norbornene-2,3-dicarboxyimide. This gave 88.5 g of a titanium compound solution of Synthesis Example 2, i.e., a solution of a titanium compound (T-2) in NMP

The titanium compound solution was analyzed by FT-IR, showing an absorption peak of Ti-O-N (1107 $cm^{-1}$) and an absorption peak of C=O in imide (1712 $cm^{-1}$). From this, the obtained titanium compound (T-2) was estimated as triisopropoxy(N-(5-norbornene-2,3-dicarboxyimidyl)oxy)titanium.

(Synthesis Example 3)

A method of synthesizing a titanium compound (T-3) of Synthesis Example 3 will be described. The method of synthesizing a titanium compound (T-3) was performed in the same manner as in Synthesis Example 1, except that 11.5 g (0.1 mol) of N-hydroxysuccinimide in Synthesis Example 1 was changed to 16.3 g (0.1 mol) of N-hydroxyphthalimide. This gave 87.1 g of a titanium compound solution of Synthesis Example 3, i.e., a solution of a titanium compound (T-3) in NMP

The titanium compound solution was analyzed by FT-IR, showing an absorption peak of Ti-O-N (1107 $cm^{-1}$) and an absorption peak of C=O in imide (1711 $cm^{-1}$). From this, the obtained titanium compound (T-3) was estimated as triisopropoxy(N-phthalimidyloxy) titanium.

(Synthesis Example 4)

A method of synthesizing a zirconium compound (Z-1) of Synthesis Example 4 will be described. The method of synthesizing a zirconium compound (Z-1) was performed in the same manner as in Synthesis Example 2 except that 28.4 g (0.1 mol) of tetraisopropoxy titanium in Synthesis Example 2 was changed to 32.7 g (0.1 mol) of tetra-n-propoxyzirconium, and n-propyl alcohol as a by-product was removed by evaporation under reduced pressure. This gave 92.1 g of a zirconium compound solution of Synthesis Example 4, i.e., a solution of a zirconium compound (Z-1) in NMP

This zirconium compound solution was analyzed by FT-IR, showing an absorption peak of Zr-O-N (1263 $cm^{-1}$) and an absorption peak of C=O in imide (1631 $cm^{-1}$). From this, the obtained zirconium compound (Z-1) was estimated as tri-n-propoxy(N-(5-norbornene-2,3-dicarboxyimidyl)oxy)zirconium.

(Synthesis Example 5)

A method of synthesizing an aluminum compound (A-1) of Synthesis Example 5 will be described. The method of synthesizing an aluminum compound (A-1) was performed in the same manner as in Synthesis Example 2 except that 28.4 g (0.1 mol) of tetraisopropoxy titanium in Synthesis Example 2 was changed to 24.6 g (0.1 mol) of tri-s-butoxy aluminum, and s-butyl alcohol as a by-product was removed by evaporation under reduced pressure. This gave 83.1 g of an aluminum compound solution of Synthesis Example 5, i.e., a solution of an aluminum compound (A-1) in NMP

This aluminum compound solution was analyzed by FT-IR, showing an absorption peak of Al-O-N (1133 $cm^{-1}$) and an absorption peak of C=O in imide (1670 $cm^{-1}$). From this, the obtained aluminum compound (A-1) was estimated as di-s-butoxy(N-(5-norbornene-2,3-dicarboxyimidyl)oxy)aluminum.

Synthesis Examples 1 to 5 described above are collectively shown in Table 1.

(Table 1)

| | | raw material 1 | raw material 2 | obtained metal compound | estimated structure | M | m | n |
|---|---|---|---|---|---|---|---|---|
| Synthesis Example 1 | titanium compound (T-1) | 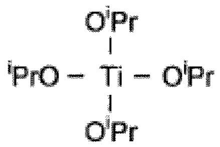 | 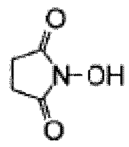 | triisopropoxy(N-succinimidyloxy) titanium | 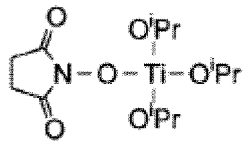 | Ti | 4 | 1 |
| Synthesis Example 2 | titanium compound (T-2) | 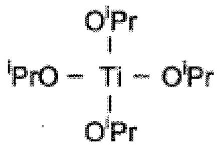 | 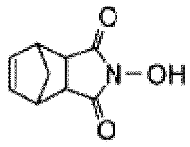 | triisopropoxy(N-(5-norbornene-2,3-dicarboxyimidyl)oxy)titanium | 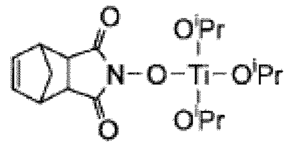 | Ti | 4 | 1 |
| Synthesis Example 3 | titanium compound (T-3) | 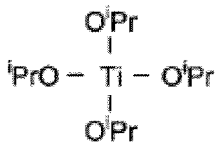 | 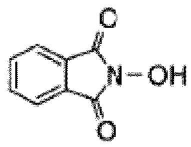 | triisopropoxy(N - phthalimidyloxy) titanium | 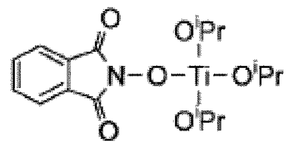 | Ti | 4 | 1 |
| Synthesis Example 4 | zirconium compound (Z-1) | 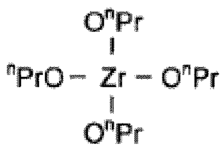 | 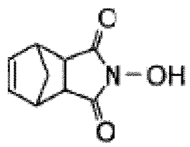 | tri-n-propoxy(N-(5-norbornene-2,3-dicarboxyimidyl)oxy)zirconium | 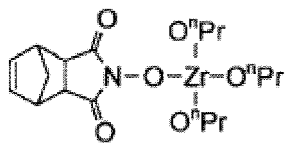 | Zr | 4 | 1 |
| Synthesis Example 5 | aluminum compound (A-1) | 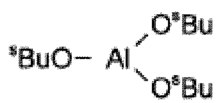 | 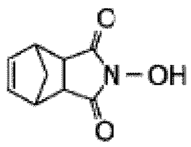 | di-s-butoxy(N-(5-norbornene-2,3-dicarboxyimidyl)oxy)aluminum | 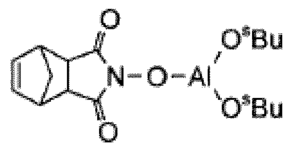 | A1 | 3 | 1 |

Hereinafter, in Examples and Comparative Examples, the solid content concentration in a polymetalloxane solution was determined by the following method. Specifically, the solid content concentration in a polymetalloxane solution was determined by weighing 1.0 g of the polymetalloxane solution in an aluminum cup, heating the polymetalloxane solution at 250°C for 30 minutes using a hot plate to evaporate the liquid component, and weighing the solid content remaining in the aluminum cup after heating.

The weight average molecular weight (Mw) was determined by the following method. Specifically, lithium chloride was dissolved in NMP to prepare a 0.02 M solution of lithium chloride in NMP as an eluent. A polymetalloxane was dissolved in the eluent into a concentration of 0.2% by weight, and the solution thus obtained was used as a sample solution. The eluent was loaded into a porous gel column (each one of TSK gel α-M, α-3000, manufactured by Tosoh Corporation) at a flow rate of 0.5 mL/min, and 0.2 mL of the sample solution was injected into the column. The column eluate was detected with a differential refractive index detector (Model RI-201, manufactured by Showa Denko K.K.) and the elution time was analyzed to determine the weight average molecular weight (Mw).

(Example 1)

Polymetalloxane (TP-1) was synthesized in Example 1. In this method of synthesizing polymetalloxane (TP-1), a solution of titanium compound (T-1) in NMP (82.1g) synthesized in Synthesis Example 1 was used as solution 1. This amount of the solution 1 was equivalent to a molar amount of the titanium compound (T-1) of 0.1 mol. In addition, 5.4 g (0.30 mol) of water, 15.0 g of NMP as a solvent for diluting water, and 1.4 g (0.01 mol) of tripropylamine as a polymerization catalyst were mixed, and this mixed solution was used as a solution 2.

Next, the entire amount of the solution 1 was charged in a 500-ml three-necked flask, and the three-necked flask was immersed in an oil bath at 40°C with stirring for 30 minutes. Thereafter, for the purpose of hydrolysis, the entire amount of the solution 2 was charged in a dropping funnel and added to the three-necked flask over 1 hour. During the addition of solution 2, precipitation did not occur in the solution in the three-necked flask, and the solution was a uniform solution. After the addition of the solution 2, the solution was stirred for additional 1 hour to make the titanium compound (T-1) in the solution into a metal compound containing a hydroxyl group. Thereafter, for the purpose of polycondensation, the oil bath was heated to 140°C over 30 minutes. One hour after starting of temperature rise, the internal temperature of the solution reached 100°C, and the mixture was heated with stirring for 2 hours (internal temperature was 100°C to 130°C). During the reaction, IPA and water were distilled as by-products. During the heating with stirring, precipitation did not occur in the solution in the three-necked flask, and the solution was a uniform solution. After completion of the heating, the liquid in the three-necked flask was cooled to room temperature to obtain a polymetalloxane solution. The concentration of the solid content in the polymetalloxane solution was determined, and then NMP was added such that the solid content concentration became 20% by weight to obtain a polymetalloxane (TP-1) solution.

The obtained polymetalloxane (TP-1) was analyzed by FT-IR, showing an absorption peak of Ti-O-N (1107 $cm^{-1}$) and an absorption peak of C=O in imide (1712 $cm^{-1}$). These results demonstrated that the polymetalloxane (TP-1) was polymetalloxane having an N-succinimidyloxy group. The weight average molecular weight (Mw) of the polymetalloxane (TP-1) was 310,000 in terms of polystyrene.

(Example 2)

Polymetalloxane (TP-2) was synthesized in Example 2. The method of synthesizing polymetalloxane (TP-2) was performed in the same manner as in Example 1 except that the solution of the titanium compound (T-1) in NMP (82.1 g) in Example 1 was changed to the solution of the titanium compound (T-2) in NMP synthesized in Synthesis Example 2 (88.5 g: equivalent to 0.1 mol of the titanium compound (T-2)) as the solution 1, to obtain a polymetalloxane solution of Example 2. The concentration of the solid content in the polymetalloxane solution was determined, and then NMP was added such that the solid content concentration became 20% by weight to obtain a polymetalloxane (TP-2) solution.

The obtained polymetalloxane (TP-2) was analyzed by FT-IR, showing an absorption peak of Ti-O-N (1107 $cm^{-1}$) and an absorption peak of C=O in imide (1712 $cm^{-1}$). These results demonstrated that the polymetalloxane (TP-2) was polymetalloxane having an N-(5-norbornene-2,3-dicarboxyimidyl)oxy group. The weight average molecular weight (Mw) of the polymetalloxane (TP-2) was 420,000 in terms of polystyrene.

(Example 3)

Polymetalloxane (TP-3) was synthesized in Example 3. The method of synthesizing polymetalloxane (TP-3) was performed in the same manner as in Example 1 except that the solution of the titanium compound (T-1) in NMP (82.1 g) in Example 1 was changed to the solution of the titanium compound (T-3) in NMP synthesized in Synthesis Example 3 (87.1 g: equivalent to 0.1 mol of the titanium compound (T-3)) as the solution 1, to obtain a polymetalloxane

solution of Example 3. The concentration of the solid content in the polymetalloxane solution was determined, and then NMP was added such that the solid content concentration became 20% by weight to obtain a polymetalloxane (TP-3) solution.

The obtained polymetalloxane (TP-3) was analyzed by FT-IR, showing an absorption peak of Ti-O-N (1107 $cm^{-1}$) and an absorption peak of C=O in imide (1711 $cm^{-1}$). These results demonstrated that the polymetalloxane (TP-3) was polymetalloxane having an N-phthalimidyloxy group. The weight average molecular weight (Mw) of the polymetalloxane (TP-3) was 350,000 in terms of polystyrene.

(Example 4)

Polymetalloxane (ZP-1) was synthesized in Example 4. The method of synthesizing polymetalloxane (ZP-1) was performed in the same manner as in Example 1 except that the solution of the titanium compound (T-1) in NMP (82.1 g) in Example 1 was changed to the solution of the zirconium compound (Z-1) in NMP synthesized in Synthesis Example 4 (92.1 g: equivalent to 0.1 mol of the zirconium compound (Z-1)) as the solution 1, to obtain a polymetalloxane solution of Example 4. During the reaction in Example 4, n-propyl alcohol and water were distilled as by-products. The concentration of the solid content in the polymetalloxane solution obtained in Example 4 was determined, and then NMP was added such that the solid content concentration became 20% by weight to obtain a polymetalloxane (ZP-1) solution.

The obtained polymetalloxane (ZP-1) was analyzed by FT-IR, showing an absorption peak of Zr-O-N (1263 $cm^{-1}cm^{-1}$) and an absorption peak of C=O in imide (1631 $cm^{-1}$). These results demonstrated that the polymetalloxane (ZP-1) was polymetalloxane having an N-(5-norbornene-2,3-dicarboxyimidyl)oxy group. The weight average molecular weight (Mw) of the polymetalloxane (ZP-1) was 450,000 in terms of polystyrene.

(Example 5)

Polymetalloxane (ZAP-1) was synthesized in Example 5. The method of synthesizing polymetalloxane (ZAP-1) was performed in the same manner as in Example 1 except that the solution of the titanium compound (T-1) in NMP (82.1 g) in Example 1 was changed to the solution of the zirconium compound (Z-1) in NMP synthesized in Synthesis Example 4 (46.0 g: equivalent to 0.05 mol of the zirconium compound (Z-1)) and the solution of the aluminum compound (A-1) in NMP synthesized in Synthesis Example 5 (41.6 g: equivalent to 0.05 mol of the aluminum compound (A-1)) as the solution 1, to obtain a polymetalloxane solution of Example 5. During the reaction in Example 5, n-propyl alcohol, s-butyl alcohol, and water were distilled as by-products. The concentration of the solid content in the polymetalloxane solution obtained in Example 5 was determined, and then NMP was added such that the solid content concentration became 20% by weight to obtain a polymetalloxane (ZAP-1) solution.

The obtained polymetalloxane (ZAP-1) was analyzed by FT-IR, showing an absorption peak of Zr-O-N (1263 $cm^{-1}$), an absorption peak of Al-O-N (1133 $cm^{-1}$), and an absorption peak of C=O in imide (1631 $cm^{-1}$). These results demonstrated that the polymetalloxane (ZAP-1) was polymetalloxane having an N-(5-norbornene-2,3-dicarboxyimidyl)oxy group. The weight average molecular weight (Mw) of the polymetalloxane (ZAP-1) was 270,000 in terms of polystyrene.

(Example 6)

Polymetalloxane (TAP-1) was synthesized in Example 6. The method of synthesizing polymetalloxane (TAP-1) was performed in the same manner as in Example 1 except that the solution of the titanium compound (T-1) in NMP (82.1 g) in Example 1 was changed to the solution of the titanium compound (T-2) in NMP synthesized in Synthesis Example 2 (44.2 g: equivalent to 0.05 mol of the titanium compound (T-2)) and the solution of the aluminum compound (A-1) in NMP synthesized in Synthesis Example 5 (41.6 g: equivalent to 0.05 mol of the aluminum compound (A-1)) as the solution 1, to obtain a polymetalloxane solution of Example 6. During the reaction in Example 6, IPA, s-butyl alcohol, and water were distilled as by-products. The concentration of the solid content in the polymetalloxane solution obtained in Example 6 was determined, and then NMP was added such that the solid content concentration became 20% by weight to obtain a polymetalloxane (TAP-1) solution.

The obtained polymetalloxane (TAP-1) was analyzed by FT-IR, showing an absorption peak of Ti-O-N (1107 $cm^{-1}$), an absorption peak of Al-O-N (1133 $cm^{-1}$), and an absorption peak of C=O in imide (1712 $cm^{-1}$). These results demonstrated that the polymetalloxane (TAP-1) was polymetalloxane having an N-(5-norbornene-2,3-dicarboxyimidyl)oxy group. The weight average molecular weight (Mw) of the polymetalloxane (TAP-1) was 180,000 in terms of polystyrene.

(Comparative Synthesis Example 1)

Polymetalloxane (TP-4) was synthesized in Comparative Synthesis Example 1. In the method of synthesizing polymetalloxane (TP-4), 34.0 g (0.1 mol) of tetrabutoxy titanium was added to a 500-mL three-necked flask, and the three-necked flask was immersed in an oil bath at 75°C with stirring for 30 minutes (the internal temperature was 70°C). Thereafter, for the purpose of hydrolysis, a mixed solution of 3.1 g (0.17 mol) of water and 50 g of butanol was added over 1 hour to the three-necked flask. Then, the oil bath was heated to 90°C and the reaction was aged with continuous stirring for 1 hour.

The content of the three-necked flask was transferred to a 200-mL recovery flask, and the produced butanol was distilled off under reduced pressure to obtain a white solid polymetalloxane (TP-4). The concentration of the solid content in the polymetalloxane solution obtained in Example 1 was determined, and then NMP was added such that the solid content concentration became 20% by weight to obtain a polymetalloxane (TP-4) solution. The weight average molecular weight (Mw) of the polymetalloxane (TP-4) was 1,500 in terms of polystyrene.

(Comparative Synthesis Example 2)

Polymetalloxane (TP-5) was synthesized in Comparative Synthesis Example 2. In the method of synthesizing polymetalloxane (TP-5), 34.0 g (0.1 mol) of tetrabutoxy titanium and 100 g of ethanol as a solvent were added to a 500-mL three-necked flask, and the three-necked flask was immersed in an oil bath at 40°C with stirring for 30 minutes. Thereafter, for the purpose of hydrolysis, a mixed solution of 2.7 g (0.15 mol) of water, 0.25 g (0.002 mol) of t-butylhydrazine hydrochloride, and 50 g of ethanol were charged in a dropping funnel and added to the three-necked flask over 1 hour. After the addition of the mixed solution, 50 g of NMP was added and the mixture was stirred for additional 1 hour. Thereafter, for the purpose of polycondensation, the oil bath was heated to 140°C over 30 minutes. One hour after starting of temperature rise, the internal temperature of the solution reached 100°C, and the mixture was heated with stirring for 2 hours (the internal temperature was 100 to 130°C). During the reaction in Comparative Synthesis Example 2, butanol and water were distilled as by-products.

The concentration of the solid content in the polymetalloxane solution obtained in Comparative Synthesis Example 2 was determined, and then NMP was added such that the solid content concentration became 20% by weight to obtain a polymetalloxane (TP-5) solution. The weight average molecular weight (Mw) of the polymetalloxane (TP-5) was 7,800 in terms of polystyrene.

Examples 1 to 6 and Comparative Synthesis Examples 1 and 2 described above are collectively shown in Tables 2-1 to 2-3.

(Table 2-1)

| | | solution 1 | | | | | solution 2 | | | weight average molecular weight Mw |
|---|---|---|---|---|---|---|---|---|---|---|
| | | metal alkoxide | | | solvent | | water | solvent for diluting water | polymerization catalyst | |
| | | type | estimated structure | amount in mole | type | added amount | | | | |
| Example 1 | polymetalloxane (TP-1) solution | triisopropoxy(N-succinimidyloxy) titanium | 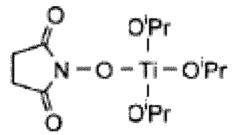 | 0.1 mol | NMP | 50.0 g | 5.4 g (0.3 mol) | NMP 15.0 g | tripropy lamine 1.4 g (0.01 mol) | 310,000 |
| Example 2 | polymetalloxane (TP-2) solution | triisopropoxy(N-(5-norbornene-2,3-dicarboxyimidyl)oxy) titanium | 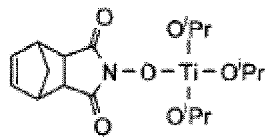 | 0.1 mol | NMP | 50.0 g | 5.4 g (0.3 mol) | NMP 15.0 g | tripropy lamine 1.4 g (0.01 mol) | 42,000 |
| Example 3 | polymetalloxane (TP-3) solution | triisopropoxy(N-phthalimidyloxy) titanium | 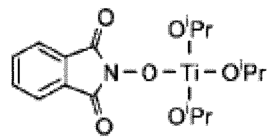 | 0.1 mol | NMP | 50.0 g | 5.4 g (0.3 mol) | NMP 15.0 g | tripropy lamine 1.4 g (0.01 mol) | 350,000 |

(Table 2-2)

| | | solution 1 | | | | | solution 2 | | | weight average molecular weight Mw |
|---|---|---|---|---|---|---|---|---|---|---|
| | | metal alkoxide | | | solvent | | water | solvent for diluting water | polymerization catalyst | |
| | | type | estimated structure | amount in mole | type | added amount | | | | |
| Example 4 | polymetalloxane (ZP-1) solution | tri-n-propoxy(N-(5-norbornene-2,3-dicarboxyimidyl) oxy)zirconium | 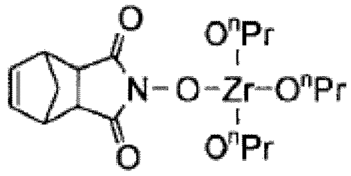 | 0.1 mol | NMP | 50.0 g | 5.4 g (0.3 mol) | NMP 15.0 g | tripropy lamine 1.4 g (0.01 mol) | 450,000 |
| Example 5 | polymetalloxane (ZAP-1) solution | tri-n-propoxy(N-(5-norbornene-2,3-dicarboxyimidyl) oxy)zirconium | 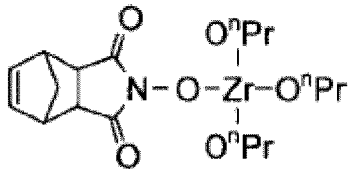 | 0.05 mol | NMP | 50.0 g | 5.4 g (0.3 mol) | NMP 15.0 g | tripropylamine 1.4 g (0.01 mol) | 270.000 |
| | | di-s-butoxy(N-(5-norbornene-2,3-dicarboxyimidyl) oxy)aluminum | 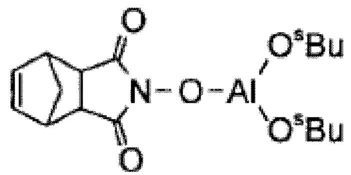 | 0.05 mol | | | | | | |
| Example 6 | polymetalloxane (TAP-1) solution | triisopropoxy(N -(5-norbornene-2,3-dicarboxyimidyl) oxy)titanium | 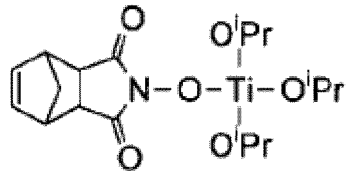 | 0.05 mol | NMP | 50.0 g | 5.4 g (0.3 mol) | NMP 15.0 g | tripropylamine 1.4 g (0.01 mol) | 180,000 |
| | | di-s-butoxy(N-(5-norbornene-2.3-dicarboxyimidyl) oxy)aluminum | 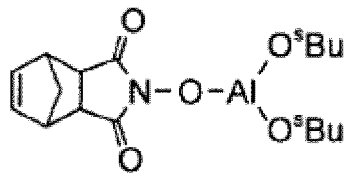 | 0.05 mol | | | | | | |

(Table 2-3)

| | | solution 1 | | | | | solution 2 | | | weight average molecular weight Mw |
|---|---|---|---|---|---|---|---|---|---|---|
| | | metal alkoxide | | | solvent | | water | solvent for diluting water | polymerization catalyst | |
| | | type | estimated structure | amount in mole | type | added amount | | | | |
| Comparative Synthesis Example 1 | polymetalloxane (TP-4) solution | tetrabutoxytitanium | 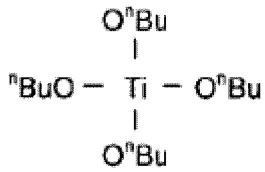 | 0.1 mol | - | - | 3.1 g (0.17 mol) | butanol 15.0 g | - | 1,500 |
| Comparative Synthesis Example 2 | polymetalloxane (TP-5) solution | tetrabutoxytitanium | 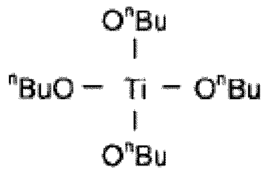 | 0.1 mol | ethanol | 100.0 g | 2.7 g (0.15 mol) | ethanol 15.0 g | t-butylhydrazine hydrochloride 0.25 g (0.02 mol) | 7,800 |

(Example 7)

(First Section: Preparation of Cured Film)

The first section of Example 7 describes a method of preparing a cured film. In this method, two 4-inch (10 cm) silicon wafers were spin-coated with the polymetalloxane (TP-1) solution using a spin coater (1H-360S, manufactured by Mikasa Corporation) and heated at 100°C for 3 minutes using a hot plate (SCW-636, manufactured by Dainippon Screen Mfg. Co., Ltd.) to prepare a prebake film. Thereafter, the film was cured by using a hot plate at 300°C for 5 minutes to prepare cured films having film thicknesses of 0.3 μm and 0.5 μm. The film thickness was measured using a spectroscopic reflectometer (Lambda Ace STM 602, manufactured by Dainippon Screen Mfg. Co., Ltd.).

(Second Section: Evaluation of Crack Resistance of Cured Film)

The second section of Example 7 describes evaluation of crack resistance of a cured film. In this evaluation, the crack resistance of the two types of cured films obtained by the method described in the first section was evaluated at five levels, each of which is defined as described below. The crack resistance rating of the cured films was considered to be acceptable if the level was 4 or higher.

5: Cracks were not observed by optical microscope observation (magnification: 5 times);
4: Cracks were slightly observed by optical microscope observation (magnification: 5 times);
3: Cracks were clearly observed by optical microscope observation (magnification: 5 times);
2: Cracks were slightly observed by normal visual observation;
1: Cracks were clearly observed by normal visual observation.

(Third Section: Measurement of Refractive Index of Cured Film)

The third section of Example 7 describes measurement of the refractive index of a cured film. With respect to the cured film having a thickness of 0.3 μm obtained by the method described in the first section, the polarization state change of the reflected light from the cured film was measured using a spectroscopic ellipsometer (FE5000, manufactured by Otsuka Electronics Co., Ltd.) to obtain a phase difference from the incident light and a spectrum of an amplitude reflectance. The temperature during the measurement was 22°C. By fitting the dielectric function of the calculation model such that it approaches the obtained spectrum, a refractive index spectrum was obtained. The refractive index value at a wavelength of 550 nm was read from the refractive index spectrum and was regarded as the refractive index of the cured film of interest. Results of the measurement and evaluation of cured films in Example 7 were shown in Table 3 described later.

(Examples 8 to 12 and Comparative Examples 1 and 2)

In Examples 8 to 12 and Comparative Examples 1 and 2, the polymetalloxane solutions shown in Table 3 was used to perform, in the same manner as in Example 7, formation of cured films by the method as described in the above-mentioned first section, evaluation of the crack resistance of cured films in the above-mentioned second section, and measurement of the refractive index of cured films in the above-mentioned third section. Results of the measurement and evaluation in Examples 8 to 12 and Comparative Examples 1 and 2 were shown in Table 3.

Cured films prepared in Comparative Examples 1 and 2 showed cracking and no homogeneous cured film was obtained. The reason is considered because the polymetalloxane used in Comparative Examples 1 and 2, which had a large amount of remaining alkoxy groups, caused hydrolysis of the alkoxy groups with water in the air during formation of the coating film and its elimination, which increased the shrinkage stress, leading to cracking of the cured film.

(Table 3)

| | | Evaluation of Crack Resistance | | Refractive Index |
|---|---|---|---|---|
| | | film thicknesses 0.3 μm | film thicknesses 0.5 μm | |
| Example 7 | pol ymetall oxane (TP-1) solution | 5 | 4 | 1.82 |
| Example 8 | pol ymetall oxane (TP-2) solution | 5 | 5 | 1.78 |

(continued)

| | | Evaluation of Crack Resistance | | Refractive Index |
|---|---|---|---|---|
| | | film thicknesses 0.3 μm | film thicknesses 0.5 μm | |
| Example 9 | pol ymetall oxane (TP-3) solution | 5 | 5 | 1.80 |
| Example 10 | pol ymetall oxane (ZP-1) solution | 5 | 5 | 1.65 |
| Example 11 | pol ymetall oxane (ZAP-1) solution | 5 | 5 | 1.58 |
| Example 12 | pol ymetall oxane (TAP-1) solution | 5 | 5 | 1.63 |
| Comparative Example 1 | polymetalloxane (TP-4) solution | 2 | 1 | 1.82 |
| Comparative Example 2 | polymetalloxane (TP-5) solution | 2 | 1 | 1.81 |

(Example 13)

(Fourth Section: Evaluation of Chemical Resistance of Cured Film)

The fourth section of Example 13 describes evaluation of chemical resistance of a cured film. In this evaluation, two 4-inch (10 cm) silicon wafers were spin-coated with the polymetalloxane (TP-2) solution using a spin coater (1H-360S, manufactured by Mikasa Corporation) and heated at 100°C for 3 minutes using a hot plate (SCW-636, manufactured by Dainippon Screen Mfg. Co., Ltd.) to prepare prebake films. Thereafter, one of the films was cured with a hot plate at 230°C for 5 minutes to prepare a cured film having a thickness of 0.3 μm, and the other was cured at 300°C for 5 minutes to prepare a cured film having a thickness of 0.3 μm.

Next, the thus-prepared two cured films composed of polymetalloxane (TP-2) were immersed in a stripper (trade name "106", manufactured by TOKYO OHKA KOGYO CO., LTD.) heated to 70°C for 10 minutes. Then, the surface of the silicon wafer was rinsed with water for 5 minutes and dried with a compressed air flow. The above-described treatments were defined as chemical resistance treatments. The chemical resistance of the two cured films was evaluated based on the rate of change in the thicknesses of the cured film before and after the chemical resistance treatments. The chemical resistance was evaluated as "pass" for those with the rate of change in the thicknesses being less than 5%, while as "fail" for those with the rate of change in the thicknesses being 5% or more. The rate of change in the thicknesses was calculated from the following formula. Results of the evaluation in Example 13 were shown in Table 4 described later.

$$\text{Rate of change in thicknesses of cured film (\%)} = \text{(Difference in thicknesses of cured film before and after chemical resistance treatments)} / \text{(Thickness of cured film before chemical resistance treatments)} \times 100$$

(Example 14)

Example 14 performed evaluation of the chemical resistance of cured films in the same manner as in Example 13 except that the polymetalloxane (TP-2) solution in Example 13 was changed to a composition of the polymetalloxane (TP-2) solution with addition of 1% by mass of a metal element-containing compound, Alumichelate A (W) (product name, aluminum tris(acetylacetate, manufactured by Kawaken Fine Chemicals Co., Ltd.) relative to the solid content of the polymetalloxane solution. Results of the evaluation in Example 14 were shown in Table 4.

(Example 15)

Example 15 performed evaluation of the chemical resistance of cured films in the same manner as in Example 14 except that Alumichelate A (W) in Example 14 was changed to B-10 (product name, a condensate (oligomer) of tetra-n-butoxy titanium, manufactured by NIPPON SODA CO., LTD.). Results of the evaluation in Example 15 were shown in Table 4.

(Table 4)

| | polymer solution | metal element-containing compound | curing temperature | film thicknesses | | rate of change in thicknesses | pass/ fail |
|---|---|---|---|---|---|---|---|
| | | | | chemical resistance before treatment | chemical resistance after treatment | | |
| Example 13 | polymetalloxane (TP-2) solution | - | 230°C | 0.300 μm | 0.229 μm | 23.8% | fail |
| | | - | 300°C | 0.300 μm | 0.287 μm | 4.2% | pass |
| Example 14 | | Alumichelate A (W) | 230°C | 0.300 μm | 0.291 μm | 3.1% | pass |
| | | Alumichelate A (W) | 300°C | 0.300 μm | 0.293 μm | 2.5% | pass |
| Example 15 | | B-10 | 230°C | 0.300 μm | 0.288 μm | 3.9% | pass |
| | | B-10 | 300°C | 0.300 μm | 0.290 μm | 3.3% | pass |

(Example 16)

In Example 16, the polymetalloxane (TP-1) solution synthesized in Example 1 was concentrated under reduced pressure into a solid content concentration of 40%. The viscosity of the concentrated polymetalloxane (TP-1) solution was 2,000 P (200 Pa.s).

Next, the concentrated polymetalloxane (TP-1) solution was loaded into a 10-mL syringe for dispenser (manufactured by Musashi Engineering, Inc.). The syringe was equipped with a plastic needle for dispenser (inner diameter: 0.20 mm, manufactured by Musashi Engineering, Inc.) as a die and an adapter tube (manufactured by Musashi Engineering, Inc.). The adapter tube and a compressed air line were connected, then the content was extruded into an air atmosphere at 25°C at a pressure of 0.4 MPa to obtain a thread-like product.

The average fiber diameter of the obtained thread-like product was measured according to the following method. First, an adhesive tape (carbon double-stick tape for SEM (aluminum base), manufactured by Nisshin EM Co., Ltd.) was applied onto a pasteboard, and the thread-like product or a metal oxide fiber to be measured for its fiber diameter was put horizontally on the adhesive tape, which was thereafter used as a single fiber test piece. The single fiber test piece was observed from the top surface with an electron microscope, and the width of the image was considered as the fiber diameter. The fiber diameter was the average of three measurements along the longitudinal direction. This operation was performed on 20 randomly selected thread-like products or metal oxide fibers and the resulting fiber diameters were averaged to obtain the average fiber diameter. The average fiber diameter of the obtained thread-like product was 60 $\mu$m.

Next, the obtained thread-like product was dried at 25°C for 24 hours and then fired at 600°C for 60 minutes at a temperature rising rate of 10°C/min using an electric muffle furnace (FUW263PA, manufactured by ADVANTEC) under an air atmosphere to obtain a fiber. The average fiber diameter of the fired fiber was measured in the same manner as the above-mentioned thread-like product. The result showed that the average fiber diameter of the fiber was 40 $\mu$m.

In Example 16, a qualitative analysis of the fired fiber was performed by a wide-angle X-ray diffraction method (hereinafter, abbreviated as XRD) as described below. Specifically, the diffraction pattern was obtained using an X-ray diffractometer (D8 ADVANCE, manufactured by Bruker AXS GmbH) and a measurement range (2$\theta$) of 10 to 80°, followed by comparison with standard data and identification. The results showed that the fired fiber was anatase titanium dioxide and no peak other than anatase was not detected. This demonstrated that the fired fiber was a metal oxide fiber.

The tensile strength of the fired fiber was measured according to the following method. Specifically, a fiber to be measured was pulled with TENSILON universal tensile testing machine (RTM-100, manufactured by ORIENTEC) at a measurement length of 25 mm and a pulling rate of 1 mm/min. The strength at which the fiber was broken was considered as the tensile strength. It is noted that the measurement of the tensile strength was the average value of the tensile strength values of randomly selected 20 fibers. In Example 16, the tensile strength of the fired fiber was 1.2 GPa.

(Example 17)

In Example 17, a fired fiber was prepared in the same manner as in Example 16 except that the polymetalloxane (TP-1) solution was changed to a mixture of the polymetalloxane (TP-1) solution and B-10 (a metal element-containing compound) in an amount of 10% by mass relative to the solid content of the polymetalloxane solution, which was concentrated under reduced pressure into a solid content concentration of 40%. In Example 17, the average fiber diameter of the fired fiber was 40 $\mu$m, and the tensile strength of the fiber was 1.5 GPa.

(Example 18)

In Example 18, a fired fiber was prepared in the same manner as in Example 16 except that the polymetalloxane (TP-1) solution was changed to a polymetalloxane (ZAP-1) solution. In Example 18, the average fiber diameter of the fired fiber was 45 $\mu$m, and the tensile strength of the fiber was 1.5 GPa.

Industrial Availability

Thus, the polymetalloxane, the composition, the cured film, the member, the electronic component, the fiber, the binder for ceramic molding, the method of producing a cured film, and the method of producing a fiber according to the present invention are suitable for polymetalloxanes that can exist stably and uniformly in a solvent and can be industrially stably supplied, as well as compositions, cured films, members, electronic components, fibers, and binders for forming ceramic bodies using the polymetalloxanes.

## Claims

1. A polymetalloxane comprising a constituent unit represented by the following general formula (1):

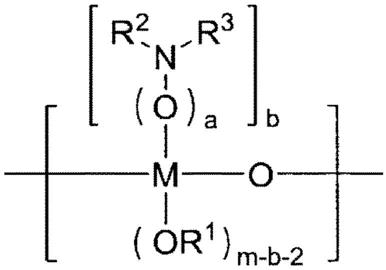

··· (1)

wherein,

$R^1$ is a hydrogen atom or an alkyl group having 1 to 10 carbon atoms;
$R^2$ and $R^3$ are each independently a hydrogen atom, an alkyl group having 1 to 12 carbon atoms, an alicyclic alkyl group having 5 to 12 carbon atoms, an aromatic group having 6 to 30 carbon atoms, or an acyl group having 1 to 12 carbon atoms;
$R^2$ and $R^3$ are optionally linked together via a carbon-carbon saturated or a carbon-carbon unsaturated bond to form a ring structure;
a is an integer of 0 or 1;
M represents a metal atom selected from the group consisting of Al, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, Tl, and Bi;
m is an integer indicating the valence of the metal atom M; and
b is an integer of 1 to (m-2).

2. The polymetalloxane according to claim 1, wherein the constituent unit represented by the general formula (1) is a constituent unit represented by the following general formula (2) ;

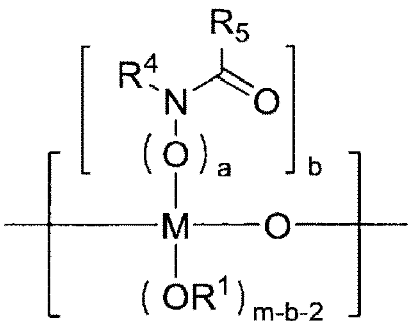

··· (2)

wherein,

$R^4$ is a hydrogen atom, an alkyl group having 1 to 12 carbon atoms, an alicyclic alkyl group having 5 to 12 carbon atoms, an aromatic group having 6 to 30 carbon atoms, or an acyl group having 1 to 12 carbon atoms;
$R^5$ is, independently from $R^4$, a hydrogen atom, an alkyl group having 1 to 12 carbon atoms, an alicyclic alkyl group having 5 to 12 carbon atoms, or an aromatic group having 6 to 30 carbon atoms; and
$R^4$ and $R^5$ are optionally linked together via a carbon-carbon saturated or a carbon-carbon unsaturated bond to form a ring structure.

3. The polymetalloxane according to claim 1, wherein the constituent unit represented by the general formula (1) is a constituent unit represented by the following general formula (3) ;

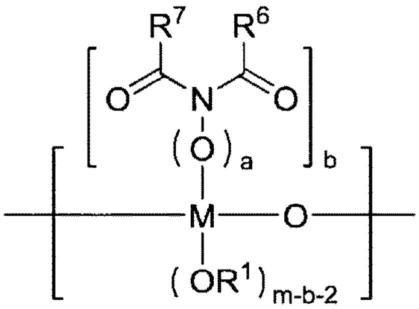

$\cdots$ (3)

wherein,

$R^6$ and $R^7$ are each independently a hydrogen atom, an alkyl group having 1 to 12 carbon atoms, an alicyclic alkyl group having 5 to 12 carbon atoms, or an aromatic group having 6 to 30 carbon atoms; and
$R^6$ and $R^7$ are optionally linked together via a carbon-carbon saturated or a carbon-carbon unsaturated bond to form a ring structure.

**4.** The polymetalloxane according to any one of claims 1 to 3, wherein the integer a is 1.

**5.** The polymetalloxane according to any one of claims 1 to 4, wherein the metal atom M comprises at least one metal atom selected from the group consisting of Al, Ti, Zr, and Sn.

**6.** A composition comprising the polymetalloxane according to any one of claims 1 to 5.

**7.** The composition according to claim 6, further comprising a metal element-containing compound.

**8.** A cured film comprising the polymetalloxane according to any one of claims 1 to 5 or the composition according to claim 6 or 7.

**9.** A method of producing a cured film, comprising the step of heating the polymetalloxane according to any one of claims 1 to 5 or the composition according to claim 6 or 7.

**10.** A member comprising the cured film according to claim 8.

**11.** An electronic component comprising the member according to claim 10.

**12.** A fiber comprising the polymetalloxane according to any one of claims 1 to 5 or the composition according to claim 6 or 7.

**13.** A method of producing a fiber, comprising the step of spinning the polymetalloxane according to any one of claims 1 to 5 or the composition according to claim 6 or 7 into a fiber.

**14.** The method of producing a fiber according to claim 13, comprising the step of firing the fiber obtained by the spinning step.

**15.** A binder for ceramic molding comprising the polymetalloxane according to any one of claims 1 to 5.

## Patentansprüche

**1.** Polymetalloxan, das eine konstituierende Einheit aufweist, welche durch die folgende allgemeine Formel (1) dargestellt ist:

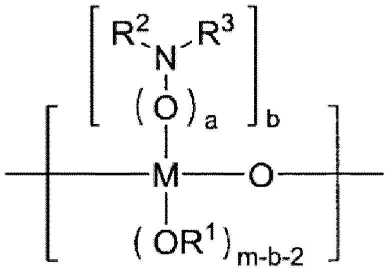

$\cdots (1)$

wobei

$R^1$ ein Wasserstoffatom oder eine Alkylgruppe mit 1 bis 10 Kohlenstoffatomen ist;
$R^2$ und $R^3$ jeweils unabhängig voneinander ein Wasserstoffatom, eine Alkylgruppe mit 1 bis 12 Kohlenstoffatomen, eine alicyclische Alkylgruppe mit 5 bis 12 Kohlenstoffatomen, eine aromatische Gruppe mit 6 bis 30 Kohlenstoffatomen, oder eine Acylgruppe mit 1 bis 12 Kohlenstoffatomen sind;
$R^2$ und $R^3$ gegebenenfalls über eine gesättigte Kohlenstoff-Kohlenstoff- oder eine ungesättigte Kohlenstoff-Kohlenstoff-Bindung miteinander verbunden sind, um eine Ringstruktur zu bilden;
a eine ganze Zahl von 0 oder 1 ist;
M ein Metallatom darstellt, ausgewählt aus der Gruppe bestehend aus Al, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, Tl, und Bi;
m eine ganze Zahl ist, die die Wertigkeit des Metallatoms M angibt; und
b eine ganze Zahl von 1 bis (m-2) ist.

2. Polymetalloxan nach Anspruch 1, wobei die konstituierende Einheit, die durch die allgemeine Formel (1) dargestellt ist, eine konstituierende Einheit ist, die durch die folgende allgemeine Formel (2) dargestellt ist:

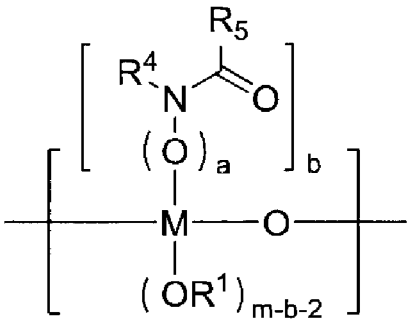

$\cdots (2)$

wobei

$R^4$ ein Wasserstoffatom, eine Alkylgruppe mit 1 bis 12 Kohlenstoffatomen, eine alicyclische Alkylgruppe mit 5 bis 12 Kohlenstoffatomen, eine aromatische Gruppe mit 6 bis 30 Kohlenstoffatomen, oder eine Acylgruppe mit 1 bis 12 Kohlenstoffatomen ist;
$R^5$, unabhängig von $R^4$, ein Wasserstoffatom, eine Alkylgruppe mit 1 bis 12 Kohlenstoffatomen, eine alicyclische Alkylgruppe mit 5 bis 12 Kohlenstoffatomen, oder eine aromatische Gruppe mit 6 bis 30 Kohlenstoffatomen ist; und
$R^4$ und $R^5$ gegebenenfalls über eine gesättigte Kohlenstoff-Kohlenstoff- oder eine ungesättigte Kohlenstoff-Kohlenstoff-Bindung miteinander verbunden sind, um eine Ringstruktur zu bilden.

3. Polymetalloxan nach Anspruch 1, wobei die konstituierende Einheit, die durch die allgemeine Formel (1) dargestellt ist, eine konstituierende Einheit ist, die durch die folgende allgemeine Formel (3) dargestellt ist:

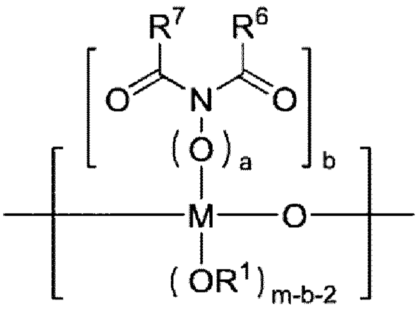

··· (3)

wobei

$R^6$ und $R^7$ jeweils unabhängig voneinander ein Wasserstoffatom, eine Alkylgruppe mit 1 bis 12 Kohlenstoffatomen, eine alicyclische Alkylgruppe mit 5 bis 12 Kohlenstoffatomen, oder eine aromatische Gruppe mit 6 bis 30 Kohlenstoffatomen sind; und
$R^6$ und $R^7$ gegebenenfalls über eine gesättigte Kohlenstoff-Kohlenstoff- oder eine ungesättigte Kohlenstoff-Kohlenstoff-Bindung miteinander verbunden sind, um eine Ringstruktur zu bilden.

**4.** Polymetalloxan nach einem der Ansprüche 1 bis 3, wobei die ganze Zahl a 1 ist.

**5.** Polymetalloxan nach einem der Ansprüche 1 bis 4, wobei das Metallatom M mindestens ein Metallatom aufweist, das aus der Gruppe bestehend aus Al, Ti, Zr, und Sn ausgewählt ist.

**6.** Zusammensetzung, die das Polymetalloxan nach einem der Ansprüche 1 bis 5 aufweist.

**7.** Zusammensetzung nach Anspruch 6, die ferner eine ein Metallelement enthaltende Verbindung aufweist.

**8.** Gehärteter Film, der das Polymetalloxan nach einem der Ansprüche 1 bis 5 oder die Zusammensetzung nach Anspruch 6 oder 7 aufweist.

**9.** Verfahren zur Herstellung eines gehärteten Films, umfassend den Schritt des Erhitzens des Polymetalloxans nach einem der Ansprüche 1 bis 5 oder der Zusammensetzung nach Anspruch 6 oder 7.

**10.** Teil, das den gehärteten Film nach Anspruch 8 aufweist.

**11.** Elektronische Komponente, die das Teil nach Anspruch 10 aufweist.

**12.** Faser, die das Polymetalloxan nach einem der Ansprüche 1 bis 5 oder die Zusammensetzung nach Anspruch 6 oder 7 aufweist.

**13.** Verfahren zur Herstellung einer Faser, umfassend den Schritt des Spinnens des Polymetalloxans nach einem der Ansprüche 1 bis 5 oder der Zusammensetzung nach Anspruch 6 oder 7 zu einer Faser.

**14.** Verfahren zur Herstellung einer Faser nach Anspruch 13, umfassend den Schritt des Brennens der durch den Spinnschritt erhaltenen Faser.

**15.** Bindemittel für Keramikformteile, das das Polymetalloxan nach einem der Ansprüche 1 bis 5 aufweist.

## Revendications

**1.** Polymétalloxane comprenant une unité constitutive représentée par la formule générale (1) suivante :

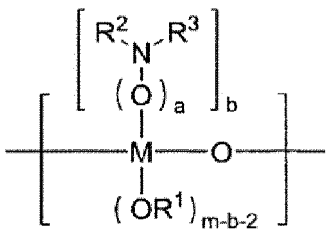

···(1)

dans laquelle,

$R^1$ est un atome d'hydrogène ou un groupe alkyle ayant 1 à 10 atomes de carbone ;
$R^2$ et $R^3$ sont chacun indépendamment un atome d'hydrogène, un groupe alkyle ayant 1 à 12 atomes de carbone, un groupe alkyle alicyclique ayant 5 à 12 atomes de carbone, un groupe aromatique ayant 6 à 30 atomes de carbone, ou un groupe acyle ayant 1 à 12 atomes de carbone ;
$R^2$ et $R^3$ sont éventuellement liés ensemble via une liaison carbone-carbone saturée ou carbone-carbone insaturée pour former une structure cyclique ;
a est un nombre entier de 0 ou 1 ;
M représente un atome de métal choisi dans le groupe consistant en Al, Ti, V, Cr, Mn, Fe, Co, Ni, Cu, Zn, Ga, Ge, Zr, Nb, Mo, Ru, Rh, Pd, Ag, In, Sn, Sb, Hf, Ta, W, Re, Os, Ir, Pt, Au, Tl et Bi ;
m est un nombre entier indiquant la valence de l'atome de métal M ; et
b est un nombre entier de 1 à (m-2).

2. Polymétalloxane selon la revendication 1, dans lequel l'unité constitutive représentée par la formule générale (1) est une unité constitutive représentée par la formule générale (2) suivante ;

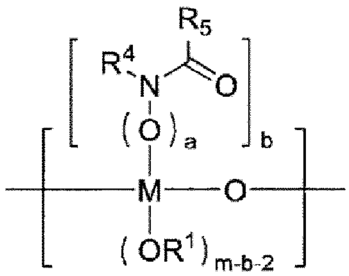

···(2)

dans laquelle,

$R^4$ est un atome d'hydrogène, un groupe alkyle ayant 1 à 12 atomes de carbone, un groupe alkyle alicyclique ayant 5 à 12 atomes de carbone, un groupe aromatique ayant 6 à 30 atomes de carbone, ou un groupe acyle ayant 1 à 12 atomes de carbone ;
$R^5$ est, indépendamment de $R^4$, un atome d'hydrogène, un groupe alkyle ayant 1 à 12 atomes de carbone, un groupe alkyle alicyclique ayant 5 à 12 atomes de carbone, ou un groupe aromatique ayant 6 à 30 atomes de carbone ; et
$R^4$ et $R^5$ sont éventuellement liés entre eux par une liaison carbone-carbone saturée ou carbone-carbone insaturée pour former une structure cyclique.

3. Polymétalloxane selon la revendication 1, dans lequel l'unité constitutive représentée par la formule générale (1) est une unité constitutive représentée par la formule générale (3) suivante ;

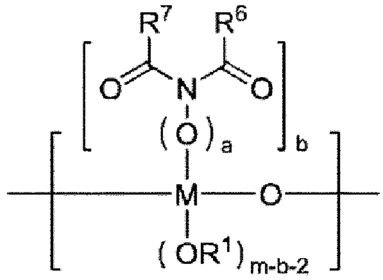

··· (3)

dans laquelle,

$R^6$ et $R^7$ sont chacun indépendamment un atome d'hydrogène, un groupe alkyle ayant 1 à 12 atomes de carbone, un groupe alkyle alicyclique ayant 5 à 12 atomes de carbone, ou un groupe aromatique ayant 6 à 30 atomes de carbone ; et
$R^6$ et $R^7$ sont éventuellement liés entre eux par une liaison carbone-carbone saturée ou carbone-carbone insaturée pour former une structure cyclique.

**4.** Polymétalloxane selon l'une quelconque des revendications 1 à 3, dans lequel le nombre entier a vaut 1.

**5.** Polymétalloxane selon l'une quelconque des revendications 1 à 4, dans lequel l'atome de métal M comprend au moins un atome de métal choisi dans le groupe consistant en Al, Ti, Zr et Sn.

**6.** Composition comprenant le polymétalloxane selon l'une quelconque des revendications 1 à 5.

**7.** Composition selon la revendication 6, comprenant en outre un composé contenant un élément métallique.

**8.** Film durci comprenant le polymétalloxane selon l'une quelconque des revendications 1 à 5 ou la composition selon la revendication 6 ou 7.

**9.** Procédé de fabrication d'un film durci, comprenant l'étape de chauffage du polymétalloxane selon l'une quelconque des revendications 1 à 5 ou de la composition selon la revendication 6 ou 7.

**10.** Organe comprenant le film durci selon la revendication 8.

**11.** Composant électronique comprenant l'organe selon la revendication 10.

**12.** Fibre comprenant le polymétalloxane selon l'une quelconque des revendications 1 à 5 ou la composition selon la revendication 6 ou 7.

**13.** Procédé de fabrication d'une fibre, comprenant l'étape de filage du polymétalloxane selon l'une quelconque des revendications 1 à 5 ou de la composition selon la revendication 6 ou 7 en une fibre.

**14.** Procédé de fabrication d'une fibre selon la revendication 13, comprenant l'étape de cuisson de la fibre obtenue par l'étape de filage.

**15.** Liant pour moulage céramique comprenant le polymétalloxane selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1129032 A
- JP 2015003896 A
- WO 2017090512 A
- JP S5898428 A
- WO 2017090512 A1

### Non-patent literature cited in the description

- Preparation of polymetalloxanes as a precursor for oxide ceramics. **ABE Y et al.** JOURNAL OF NON-CRYSTALLINE SOLIDS. NORTH-HOLLAND PHYSICS PUBLISHING, 01 May 1990, vol. 121, 21-25